(19) **Europäisches Patentamt / European Patent Office / Office européen des brevets**

(11) **EP 4 654 510 A1**

(12) **EUROPEAN PATENT APPLICATION**
published in accordance with Art. 153(4) EPC

(43) Date of publication:
**26.11.2025  Bulletin 2025/48**

(21) Application number: **23923408.1**

(22) Date of filing: **24.02.2023**

(51) International Patent Classification (IPC):
**H04L 5/00** (2006.01)

(52) Cooperative Patent Classification (CPC):
**H04L 5/00**

(86) International application number:
**PCT/CN2023/078151**

(87) International publication number:
**WO 2024/174232 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• LIU, Lei
  Shenzhen, Guangdong 518129 (CN)
• JIANG, Chenglong
  Shenzhen, Guangdong 518129 (CN)
• BI, Xiaoyan
  Shenzhen, Guangdong 518129 (CN)
• LIU, Yong
  Shenzhen, Guangdong 518129 (CN)

(74) Representative: **Pfenning, Meinig & Partner mbB
Patent- und Rechtsanwälte
Theresienhöhe 11a
80339 München (DE)**

(54) **REFERENCE SIGNAL CONFIGURATION METHOD AND COMMUNICATION APPARATUS**

(57)    This application provides a reference signal configuration method and a communication apparatus. A network device determines a plurality of channel characteristics of a channel of a reference signal port and reference signal resource configuration information based on a variation of the channel of the reference signal port in frequency domain, and sends the reference signal resource configuration information to a terminal device. The reference signal resource configuration information indicates a first resource pattern and/or a second resource pattern of the reference signal port. The first resource pattern and the second resource pattern are respectively associated with a first channel characteristic and a second channel characteristic in the plurality of channel characteristics. The method can adapt to a change of a frequency domain channel and further reduce air interface resource overheads, thereby facilitating improvement of system spectral efficiency. In addition, a resource pattern indicated by configured reference signal resource configuration information is associated with a channel characteristic. Configuration can be flexibly implemented based on the channel characteristic, so that air interface overheads can be further reduced.

FIG. 5

## EP 4 654 510 A1

**Description**

### TECHNICAL FIELD

This application relates to the field of communication technologies, and in particular, to a reference signal configuration method and a communication apparatus.

### BACKGROUND

Currently, a multiple-input multiple-output (multiple-input multiple-output, MIMO) technology is a core technology of a 5th generation (the 5th generation) communication system. In this technology, a plurality of transmit antennas are used at a transmit end, and a plurality of receive antennas are used at a receive end, so that signals are transmitted and received by using the plurality of antennas at the transmit end and the receive end, thereby improving communication quality. With development of communication technologies, a transmission bandwidth that can be supported in a 6G system increases sharply (for example, the transmission bandwidth may reach 500 megabytes (M) or more), a scale of an antenna array increases sharply (for example, a quantity of ports (ports) of a base station may reach 1000 or more), and a quantity of users increases sharply (for example, a quantity of supported terminal devices may reach 30 or more). To support a large quantity of users and a large quantity of data streams, a quantity of required reference signal (reference signal, RS) ports increases sharply, and ultra-high air interface overheads become a bottleneck problem for obtaining channel state information (channel state information, CSI).

### SUMMARY

This application provides a reference signal configuration method and a communication apparatus. Reference signal resource configuration information configured in the method can adapt to a change of a frequency domain channel, to facilitate reduction of resource overheads of a reference signal and further facilitate improvement of system spectrum efficiency.

According to a first aspect, this application provides a reference signal configuration method. The method may be performed by a network device, or may be performed by a component (for example, a processor, a chip, or a chip system) of a network device, or may be implemented by a logical module or software that can implement a part or all of functions of a network device. For example, the method is performed by the network device. The network device determines a plurality of channel characteristics of a channel of a reference signal port and reference signal resource configuration information based on a variation of the channel of the reference signal port in frequency domain, and sends the reference signal resource configuration information to a terminal device. The reference signal resource configuration information indicates a first resource pattern of the reference signal port, and the first resource pattern is associated with a first channel characteristic in the plurality of channel characteristics.

In the method, when determining the reference signal resource configuration information, the network device can adapt to a change of a frequency domain channel. The method better reduces air interface resource overheads, in comparison with a signal resource configuration method in which frequency domain resources of reference signal ports are uniformly distributed, thereby facilitating improvement of system spectrum efficiency. In addition, a resource pattern indicated by configured reference signal resource configuration information is associated with a channel characteristic. Configuration can be flexibly implemented based on the channel characteristic, so that air interface overheads can be further reduced.

In a possible implementation, the reference signal resource configuration information further indicates a second resource pattern of the reference signal port, and the second resource pattern is associated with a second channel characteristic in the plurality of channel characteristics.

In the method, the network device may configure, for a same reference signal port, two types of resource patterns to be associated with different channel characteristics, to better adapt to a change of a frequency domain channel, thereby implementing a more flexible reference signal resource configuration and facilitating reduction of air interface overheads.

In a possible implementation, the first resource pattern and the second resource pattern have different densities and/or different locations in frequency domain.

In the method, the first resource pattern and the second resource pattern have different densities and/or different locations in frequency domain, to better adapt to a change of a frequency domain channel, thereby implementing a more flexible reference signal resource configuration and facilitating reduction of air interface overheads.

In a possible implementation, a quasi co-location relationship exists between a first resource corresponding to the first resource pattern and a second resource corresponding to the second resource pattern.

In the method, the network device may configure different time-frequency resources for a same reference signal port, and a quasi co-location relationship exists between the different time-frequency resources. For example, a large-scale channel characteristic corresponding to the first resource pattern is the same as a large-scale channel characteristic corresponding to the second resource pattern. The large-scale channel characteristic corresponding to the second resource pattern is deduced from the large-scale channel characteristic corresponding to the first resource pattern, or the large-scale channel characteristic corresponding to the first resource pattern is deduced from the large-scale channel characteristic corresponding to the second resource pattern.

In a possible implementation, the first resource pattern is a common resource pattern, and the second resource pattern is a specified resource pattern of the reference signal port; or the first resource pattern is a specified resource pattern of the reference signal port, and the second resource pattern is a common resource pattern. The common resource pattern is a common resource pattern of a plurality of reference signal ports that include the reference signal port.

In the method, the first resource pattern and the second resource pattern are respectively the common resource pattern or the specified resource pattern of the reference signal port. For each reference signal port, a resource configuration manner combining a common resource pattern and a specified resource pattern is used, to better adapt to a change of a frequency domain channel of each reference signal port, thereby implementing a more flexible reference signal resource configuration and facilitating reduction of air interface overheads. In addition, the common resource pattern is configured for the plurality of reference signal ports, thereby further reducing air interface overheads.

In a possible implementation, a first variation corresponding to the first resource pattern in the variation of the channel of the reference signal port in frequency domain is less than or equal to a first threshold, a second variation corresponding to the second resource pattern in the variation of the channel of the reference signal port in frequency domain is greater than or equal to a second threshold, and the first threshold is less than the second threshold; or a first variation corresponding to the first resource pattern in the variation of the channel of the reference signal port in frequency domain is greater than or equal to a first threshold, a second variation corresponding to the second resource pattern in the variation of the channel of the reference signal port in frequency domain is less than or equal to a second threshold, and the first threshold is greater than the second threshold.

In the method, the variations of the first resource pattern and the second resource pattern in frequency domain are different in the variation of the channel of the reference signal port. In other words, the first resource pattern and the second resource pattern have different degrees of changes in frequency domain (for example, referred to as a fast change or a slow change in frequency domain). For each reference signal port, a resource configuration manner combining a fast change and a slow change is used, to better adapt to a change of a frequency domain channel of each reference signal port, thereby implementing a more flexible reference signal resource configuration and facilitating reduction of air interface overheads.

In a possible implementation, the network device performs component decomposition on the variation of the channel of the reference signal port in frequency domain, to obtain a first channel component and a second channel component, where the first channel component corresponds to the first channel characteristic, and the second channel component corresponds to the second channel characteristic; and the network device determines, based on a preset mapping relationship between a channel characteristic and a resource pattern, the first resource pattern corresponding to the first channel characteristic; or determines, based on a predefined algorithm for determining a resource pattern based on a channel characteristic, the first resource pattern corresponding to the first channel characteristic.

In the method, the network device may perform component decomposition on the variation of the channel of the reference signal port in frequency domain, to obtain the channel components and a correspondence between a channel component and a channel characteristic. Although a plurality of channel components and a plurality of channel characteristics are obtained through decomposition, in consideration of resource overheads and/or weights of the channel components, the network device may determine only the first resource pattern corresponding to the first channel characteristic, thereby facilitating reduction of air interface overheads and implementing a flexible reference signal resource configuration.

In a possible implementation, the network device performs component decomposition on the variation of the channel of the reference signal port in frequency domain, to obtain a first channel component and a second channel component, where the first channel component corresponds to the first channel characteristic, and the second channel component corresponds to the second channel characteristic; and the network device determines, based on a preset mapping relationship between a channel characteristic and a resource pattern, the first resource pattern corresponding to the first channel characteristic and the second resource pattern corresponding to the second channel characteristic; or determines, based on a predefined algorithm for determining a resource pattern based on a channel characteristic, the first resource pattern corresponding to the first channel characteristic and the second resource pattern corresponding to the second channel characteristic.

In the method, the network device may perform component decomposition on the variation of the channel of the reference signal port in frequency domain, to obtain the channel components and a correspondence between a channel component and a channel characteristic, to indirectly determine a resource pattern based on a channel characteristic, thereby implementing a more flexible reference signal resource configuration and facilitating reduction of air interface overheads.

In a possible implementation, the network device performs component decomposition on the variation of the channel of the reference signal port in frequency domain, to obtain a first channel component and a second channel component, where the first channel component is the first channel characteristic, and the second channel component is the second channel characteristic; and the network device determines, based on a preset mapping relationship between a channel component and a resource pattern, the first resource pattern corresponding to the first channel component; or determines, based on a predefined algorithm for determining a resource pattern based on a channel component, the first resource pattern corresponding to the first channel component; or determines, based on a preset mapping relationship between a metric parameter of a channel component and a resource pattern, the first resource pattern corresponding to the first channel component, where the metric parameter includes a metric threshold or a metric threshold space.

In the method, the network device may perform component decomposition on the variation of the channel of the reference signal port in frequency domain, to obtain the channel components. The channel component is the channel characteristic. Although a plurality of channel components and a plurality of channel characteristics are obtained through decomposition, in consideration of resource overheads and/or weights of the channel components, the network device may determine only the first resource pattern corresponding to the first channel component, thereby facilitating reduction of air interface overheads and implementing a flexible reference signal resource configuration.

In a possible implementation, the network device performs component decomposition on the variation of the channel of the reference signal port in frequency domain, to obtain a first channel component and a second channel component, where the first channel component is the first channel characteristic, and the second channel component is the second channel characteristic; and the network device determines, based on a preset mapping relationship between a channel component and a resource pattern, the first resource pattern corresponding to the first channel component and the second resource pattern corresponding to the second channel component; or determines, based on a predefined algorithm for determining a resource pattern based on a channel component, the first resource pattern corresponding to the first channel component and the second resource pattern corresponding to the second channel component; or determines, based on a preset mapping relationship between a metric parameter of a channel component and a resource pattern, the first resource pattern corresponding to the first channel component and the second resource pattern corresponding to the second channel component, where the metric parameter includes a metric threshold or a metric threshold space.

In the method, the network device may perform component decomposition on the variation of the channel of the reference signal port in frequency domain, to obtain the channel components and indirectly determine a resource pattern based on a channel component, thereby implementing a more flexible reference signal resource configuration and facilitating reduction of air interface overheads. The channel component is the channel characteristic.

In a possible implementation, the first channel component is associated with a first weight coefficient, and the second channel component is associated with a second weight coefficient. The network device enables the second resource pattern when the second weight coefficient is greater than or equal to a weight coefficient threshold; or the network device disables the second resource pattern when the second weight coefficient is less than a weight coefficient threshold.

In this method, the weight coefficient indicates importance of a channel component. When the second weight coefficient is greater than or equal to the weight coefficient threshold, it indicates that the second channel component is also important. In this case, the second resource pattern needs to be enabled, to implement a more flexible reference signal resource configuration, thereby facilitating reduction of air interface overheads.

In a possible implementation, the network device presets a common resource pattern set of a group of reference signal ports, where a mapping relationship exists between the resource pattern set and a group of determined channel components. The first channel component has a first index value in the resource pattern set, and the second channel component has a second index value in the resource pattern set. The first index value indicates the first resource pattern, and the second index value indicates the second resource pattern.

In the method, the network device may preset the common resource pattern set (for example, may be referred to as public resource patterns, and all reference signal ports may share these public resource patterns) of the group of reference signal ports, and the mapping relationship exists between the resource pattern set and the group of determined channel components. This facilitates a process in which the network device determines a resource pattern based on an index value of a channel component in the resource pattern set. Optionally, the network device may directly indicate an index value (for example, the first index value and the second index value) to the terminal device, and the terminal device determines a resource pattern based on the index value, to reduce indication overheads.

In a possible implementation, the network device performs manifold metric analysis on a frequency domain channel vector of the reference signal port, to obtain a first manifold metric result and a second manifold metric result that correspond to the frequency domain channel vector, where the first manifold metric result corresponds to the first channel characteristic, and the second manifold metric result corresponds to the second channel characteristic; and the network device determines, based on a preset mapping relationship between a channel characteristic and a resource pattern, the first resource pattern corresponding to the first channel characteristic; or determines, based on a predefined algorithm for determining a resource pattern based on a channel characteristic, the first resource pattern corresponding to the first channel characteristic.

In the method, the network device may perform manifold metric analysis on the frequency domain channel vector of the reference signal port, to obtain the corresponding manifold metric results, where the manifold metric results correspond to the channel characteristics. Although a plurality of manifold metric results and a plurality of channel characteristics are obtained through analysis, in consideration of resource overheads and/or weights of the manifold metric results, the network device may determine only the first resource pattern corresponding to the first channel characteristic, thereby facilitating reduction of air interface overheads and implementing a flexible reference signal resource configuration.

In a possible implementation, the network device performs manifold metric analysis on a frequency domain channel vector of the reference signal port, to obtain a first manifold metric result and a second manifold metric result that correspond to the frequency domain channel vector, where the first manifold metric result corresponds to the first channel characteristic, and the second manifold metric result corresponds to the second channel characteristic; and the network device determines, based on a preset mapping relationship between a channel characteristic and a resource pattern, the first resource pattern corresponding to the first channel characteristic and the second resource pattern corresponding to the second channel characteristic; or determines, based on a predefined algorithm for determining a resource pattern based on a channel characteristic, the first resource pattern corresponding to the first channel characteristic and the second resource pattern corresponding to the second channel characteristic.

In the method, the network device may perform manifold metric analysis on the frequency domain channel vector of the reference signal port, to obtain the corresponding manifold metric results. The manifold metric results correspond to the channel characteristics, to indirectly determine the resource patterns based on the channel characteristics, thereby implementing a more flexible reference signal resource configuration and facilitating reduction of air interface overheads.

In a possible implementation, the network device performs manifold metric analysis on a frequency domain channel vector of the reference signal port, to obtain a first manifold metric result and a second manifold metric result that correspond to the frequency domain channel vector, where the first manifold metric result is the first channel characteristic, and the second manifold metric result is the second channel characteristic; and the network device determines, based on a preset mapping relationship between a metric parameter and a resource pattern, the first resource pattern corresponding to the first manifold metric result, where the metric parameter includes a metric threshold or a metric threshold interval.

In the method, the network device may perform manifold metric analysis on the frequency domain channel vector of the reference signal port, to obtain the corresponding manifold metric results, where the manifold metric results are the channel characteristics. Although a plurality of manifold metric results and a plurality of channel characteristics are obtained through analysis, in consideration of resource overheads and/or weights of the manifold metric results, and network resource allocation and/or weights of the manifold metric results, the network device may determine only the first resource pattern corresponding to the first manifold metric result, thereby facilitating reduction of air interface overheads and implementing a flexible reference signal resource configuration.

In a possible implementation, the network device performs manifold metric analysis on a frequency domain channel vector of the reference signal port, to obtain a first manifold metric result and a second manifold metric result that correspond to the frequency domain channel vector, where the first manifold metric result is the first channel characteristic, and the second manifold metric result is the second channel characteristic; and the network device determines, based on a preset mapping relationship between a metric parameter and a resource pattern, the first resource pattern corresponding to the first manifold metric result and the second resource pattern corresponding to the second manifold metric result, where the metric parameter includes a metric threshold or a metric threshold interval.

In the method, the network device may perform manifold metric analysis on the frequency domain channel vector of the reference signal port, to obtain the corresponding manifold metric results. The manifold metric results are the channel characteristics, to directly determine the resource patterns based on the manifold metric results, thereby implementing a more flexible reference signal resource configuration and facilitating reduction of air interface overheads.

According to a second aspect, this application provides another reference signal configuration method. The method may be performed by a terminal device, or may be performed by a component (for example, a processor, a chip, or a chip system) of a terminal device, or may be implemented by a logical module or software that can implement a part or all of functions of a terminal device. For example, the method is performed by the terminal device. The terminal device obtains reference signal resource configuration information, where the reference signal resource configuration information indicates a first resource pattern of the reference signal port, the first resource pattern is associated with a first channel characteristic in a plurality of channel characteristics, and the plurality of channel characteristics are determined based on a variation of a channel of the reference signal port in frequency domain. The terminal device determines a configuration of the reference signal port based on the reference signal resource configuration information.

In the method, the reference signal resource configuration information obtained by the terminal device can adapt to a change of a frequency domain channel. The method better reduces air interface resource overheads, in comparison with a signal resource configuration method in which frequency domain resources of reference signal ports are uniformly distributed, thereby facilitating improvement of system spectrum efficiency. In addition, a resource pattern indicated by the reference signal resource configuration information is associated with a channel characteristic. The terminal device can flexibly configure the reference signal port based on the channel characteristic, so that air interface overheads can be further reduced.

In a possible implementation, the terminal device determines channel information of the reference signal port based on the configuration of the reference signal port.

In the method, the terminal device may obtain the complete channel information of the reference signal port.

In a possible implementation, the reference signal resource configuration information further indicates a second resource pattern of the reference signal port, and the second resource pattern is associated with a second channel characteristic in the plurality of channel characteristics.

In an implementation in which the terminal device determines the channel information of the reference signal port based on the configuration of the reference signal port, the terminal device obtains the complete channel information of the reference signal port based on the first resource pattern, or the terminal device obtains the complete channel information of the reference signal port based on the first resource pattern and the second resource pattern.

In the method, two types of resource patterns to be associated with different channel characteristics may be configured for a same reference signal port, to better adapt to a change of a frequency domain channel, thereby implementing a more flexible reference signal resource configuration and facilitating reduction of air interface overheads.

In a possible implementation, the first resource pattern and the second resource pattern have different densities and/or different locations in frequency domain.

In the method, the first resource pattern and the second resource pattern have different densities and/or different locations in frequency domain, to better adapt to a change of a frequency domain channel, thereby implementing a more flexible reference signal resource configuration and facilitating reduction of air interface overheads.

In a possible implementation, a quasi co-location relationship exists between a first resource corresponding to the first resource pattern and a second resource corresponding to the second resource pattern.

In the method, different time-frequency resources may be configured for a same reference signal port, and a quasi co-location relationship exists between the different time-frequency resources. For example, a large-scale channel characteristic corresponding to the first resource pattern is the same as a large-scale channel characteristic corresponding to the second resource pattern. The large-scale channel characteristic corresponding to the second resource pattern is deduced from the large-scale channel characteristic corresponding to the first resource pattern, or the large-scale channel characteristic corresponding to the first resource pattern is deduced from the large-scale channel characteristic corresponding to the second resource pattern.

In a possible implementation, the first resource pattern is a common resource pattern, and the second resource pattern is a specified resource pattern of the reference signal port; or the first resource pattern is a specified resource pattern of the reference signal port, and the second resource pattern is a common resource pattern. The common resource pattern is a common resource pattern of a plurality of reference signal ports that include the reference signal port.

In the method, the first resource pattern and the second resource pattern are respectively the common resource pattern or the specified resource pattern of the reference signal port. For each reference signal port, a resource configuration manner combining a common resource pattern and a specified resource pattern is used, to better adapt to a change of a frequency domain channel of each reference signal port, thereby implementing a more flexible reference signal resource configuration and facilitating reduction of air interface overheads. In addition, the common resource pattern is configured for the plurality of reference signal ports, thereby further reducing air interface overheads.

In a possible implementation, a first variation corresponding to the first resource pattern in the variation of the channel of the reference signal port in frequency domain is less than or equal to a first threshold, a second variation corresponding to the second resource pattern in the variation of the channel of the reference signal port in frequency domain is greater than or equal to a second threshold, and the first threshold is less than the second threshold; or a first variation corresponding to the first resource pattern in the variation of the channel of the reference signal port in frequency domain is greater than or equal to a first threshold, a second variation corresponding to the second resource pattern in the variation of the channel of the reference signal port in frequency domain is less than or equal to a second threshold, and the first threshold is greater than the second threshold.

In the method, the variations of the first resource pattern and the second resource pattern in frequency domain are different in the variation of the channel of the reference signal port. In other words, the first resource pattern and the second resource pattern have different degrees of changes in frequency domain (for example, referred to as a fast change or a slow change in frequency domain). For each reference signal port, a resource configuration manner combining a fast change and a slow change is used, to better adapt to a change of a frequency domain channel of each reference signal port, thereby implementing a more flexible reference signal resource configuration and facilitating reduction of air interface overheads.

In a possible implementation, the terminal device obtains the reference signal resource configuration information through protocol predefinition; or receives the reference signal resource configuration information from a network device by using a broadcast channel or a control channel.

In the method, the terminal device may obtain a resource pattern through protocol predefinition (for example, obtain a common resource pattern through protocol predefinition), or may receive a resource pattern by using a broadcast channel or a control channel (for example, obtain a specified resource pattern by using a downlink control channel, and may dynamically perform enabling or disabling), to implement a more flexible reference signal resource configuration, thereby facilitating reduction of air interface overheads.

In a possible implementation, the terminal device receives a first reference signal of the reference signal port based on the first resource pattern; and then performs channel estimation based on the first reference signal, and determines the channel information of the reference signal port.

In the method, when only the first resource pattern is configured for the reference signal port of the terminal device, the terminal device may receive the first reference signal based on the first resource pattern, and perform channel estimation based on the first reference signal, to obtain the complete channel information of the reference signal port.

In a possible implementation, the terminal device receives a first reference signal of the reference signal port based on the first resource pattern; and receives a second reference signal of the reference signal port based on the second resource pattern. The terminal device performs joint channel estimation based on the first reference signal and the second reference signal, and determines the channel information of the reference signal port.

In the method, when the first resource pattern and the second resource pattern are configured for the reference signal port of the terminal device, the terminal device may receive the first reference signal and the second reference signal respectively based on the first resource pattern and the second resource pattern, and perform channel estimation based on the first reference signal and the second reference signal, to obtain the complete channel information of the reference signal port.

In a possible implementation, the terminal device receives a reference signal of the reference signal port based on the first resource pattern. The terminal device determines, based on a preset mapping relationship between a channel component and a resource pattern, a third channel component corresponding to the first resource pattern; or determines, based on a predefined algorithm for determining a resource pattern based on a channel component, a third channel component corresponding to the first resource pattern; or determines, based on a preset mapping relationship between a metric parameter of a channel component and a resource pattern, a third channel component corresponding to the first resource pattern, where the metric parameter includes a metric threshold or a metric threshold space. The terminal device determines the channel information of the reference signal port based on the first reference signal and the third channel component.

In the method, when only the first resource pattern is configured for the reference signal port of the terminal device, the terminal device may receive the first reference signal based on the first resource pattern, determine the corresponding third channel component based on the first resource pattern, and then perform channel estimation based on the first reference signal and the third channel component, to more accurately estimate the complete channel information of the reference signal port.

In a possible implementation, the terminal device receives a first reference signal of the reference signal port based on the first resource pattern; and receives a second reference signal of the reference signal port based on the second resource pattern. The terminal device determines, based on a preset mapping relationship between a channel component and a resource pattern, a third channel component corresponding to the first resource pattern and a fourth channel component corresponding to the second resource pattern; or determines, based on a predefined algorithm for determining a resource pattern based on a channel component, a third channel component corresponding to the first resource pattern and a fourth channel component corresponding to the second resource pattern; or determines, based on a preset mapping relationship between a metric parameter of a channel component and a resource pattern, a third channel component corresponding to the first resource pattern and a fourth channel component corresponding to the second resource pattern, where the metric parameter includes a metric threshold or a metric threshold space. The terminal device determines the channel information of the reference signal port based on the first reference signal, the second reference signal, the third channel component, and the fourth channel component.

In the method, when the first resource pattern and the second resource pattern are configured for the reference signal port of the terminal device, the terminal device may receive the first reference signal and the second reference signal respectively based on the first resource pattern and the second resource pattern, and perform channel estimation based on the first reference signal, the second reference signal, the third channel component, and the fourth channel component, to obtain the complete channel information of the reference signal port.

In a possible implementation, the terminal device receives a first reference signal of the reference signal port based on the first resource pattern; and determines, based on a preset mapping relationship between a metric parameter and a resource pattern, a third manifold metric result corresponding to the first resource pattern, where the metric parameter includes a metric threshold or a metric threshold space. The terminal device determines the channel information of the reference signal port based on the first reference signal and the third manifold metric result.

In the method, when only the first resource pattern is configured for the reference signal port of the terminal device, the terminal device may receive the first reference signal based on the first resource pattern, determine the corresponding third manifold metric result based on the first resource pattern, and then perform channel estimation based on the first reference signal and the third manifold metric result, to more accurately estimate the complete channel information of the reference signal port.

In a possible implementation, the terminal device receives a first reference signal of the reference signal port based on the first resource pattern; and receives a second reference signal of the reference signal port based on the second resource pattern. The terminal device determines, based on a preset mapping relationship between a metric parameter and a resource pattern, a third manifold metric result corresponding to the first resource pattern and a fourth manifold metric result corresponding to the second resource pattern, where the metric parameter includes a metric threshold or a metric threshold space. The terminal device determines the channel information of the reference signal port based on the first reference signal, the second reference signal, the third manifold metric result, and the fourth manifold metric result.

In the method, when the first resource pattern and the second resource pattern are configured for the reference signal port of the terminal device, the terminal device may receive the first reference signal and the second reference signal respectively based on the first resource pattern and the second resource pattern, determine the corresponding third manifold metric result based on the first resource pattern, and determine the fourth manifold metric result corresponding to the second resource pattern, to perform channel estimation based on the first reference signal, the second reference signal, the third manifold metric result, and the fourth manifold metric result, thereby more accurately estimating the complete channel information of the reference signal port.

In a possible implementation, the terminal device determines the configuration of the reference signal port based on the first resource pattern and the second resource pattern that are obtained at a first moment; or determines the configuration of the reference signal port based on the first resource pattern obtained at a first moment and the second resource pattern obtained at a second moment.

In the method, the terminal device may obtain the first resource pattern and the second resource pattern at a same moment or at different moments.

In a possible implementation, the terminal device determines the second resource pattern at a second moment based on the first resource pattern obtained at a first moment; and determines the configuration of the reference signal port based on the first resource pattern and the second resource pattern.

In the method, the terminal device may determine the second resource pattern based on the first resource pattern. In other words, the first resource pattern and the second resource pattern are at different moments.

According to a third aspect, this application provides a communication apparatus. The communication apparatus may be a network device, an apparatus in a network device, or an apparatus that can be used with a network device in a matching manner. In a possible implementation, the communication apparatus may include a one-to-one corresponding module for performing the method/operation/step/action described in the first aspect or any possible implementation of the first aspect. The module may be a hardware circuit, or may be software, or may be implemented by a hardware circuit in combination with software. In a possible implementation, the communication apparatus may include a processing unit and a communication unit.

It may be understood that the communication apparatus may also implement effect that can be implemented in the first aspect or any possible implementation of the first aspect.

According to a fourth aspect, this application provides another communication apparatus. The communication apparatus may be a terminal device, an apparatus in a terminal device, or an apparatus that can be used together with a terminal device. In a possible implementation, the communication apparatus may include a one-to-one corresponding module for performing the method/operation/step/action described in the second aspect or any possible implementation of the second aspect. The module may be a hardware circuit, or may be software, or may be implemented by a hardware circuit in combination with software. In a possible implementation, the communication apparatus may include a processing unit and a communication unit.

It may be understood that the communication apparatus may also implement effect that can be implemented in the second aspect or any possible implementation of the second aspect.

For the third aspect or the fourth aspect, in an example, the processing unit may be a processor, and the communication unit may be a transceiver unit, a transceiver, or a communication interface. It may be understood that when the communication apparatus is a communication device (for example, a terminal device or a network device), the communication unit may be a transceiver in the apparatus, for example, implemented by using an antenna, a feeder line, and a codec in the apparatus. Alternatively, if the communication apparatus is a chip disposed in a device, the processing unit may be a processing circuit, a logic circuit, or the like of the chip, and the communication unit may be an input/output interface of the chip, for example, an input/output circuit or a pin.

According to a fifth aspect, this application provides a communication apparatus. The communication apparatus includes a processor, configured to execute instructions. Optionally, the communication apparatus further includes a memory. The memory is configured to store the instructions. When the instructions are executed by the processor, the communication apparatus is enabled to implement the method in the first aspect or any possible implementation of the first aspect. Optionally, the processor is coupled to the memory.

According to a sixth aspect, this application provides a communication apparatus. The communication apparatus includes a processor, configured to execute instructions. Optionally, the communication apparatus further includes a memory. The memory is configured to store the instructions. When the instructions are executed by the processor, the communication apparatus is enabled to implement the method in the second aspect or any possible implementation of the second aspect. Optionally, the processor is coupled to the memory.

According to a seventh aspect, this application provides a communication system. The communication system includes a plurality of apparatuses or devices in the third aspect to the sixth aspect, so that the apparatuses or the devices perform the method in any one of the first aspect, the second aspect, and any possible implementation of the first aspect and the second aspect.

According to an eighth aspect, this application provides a computer-readable storage medium. The computer-readable storage medium stores instructions. When the instructions are run on a computer, the computer is enabled to perform the method in the first aspect and the second aspect, and any possible implementation of the first aspect and the second aspect.

According to a ninth aspect, this application provides a chip system. The chip system includes a processor and an interface. Optionally, the chip system may further include a memory, configured to implement the method in the first aspect and the second aspect, and any possible implementation of the first aspect and the second aspect. The chip system may include a chip, or may include a chip and another discrete component.

According to a tenth aspect, this application provides a computer program product, including instructions. When the instructions are run on a computer, the computer is enabled to perform the method in the first aspect and the second aspect, and any possible implementation of the first aspect and the second aspect.

## BRIEF DESCRIPTION OF DRAWINGS

FIG. 1 is a diagram of a communication system according to this application;
FIG. 2 is a diagram of a demodulation reference signal DMRS;
FIG. 3 is a diagram of a channel sounding reference signal SRS;
FIG. 4 is a diagram of a channel state information reference signal CSI-RS time-frequency resource pattern;
FIG. 5 schematic flowchart of a reference signal configuration method according to this application;
FIG. 6 is a diagram of a variation of a channel of a reference signal port in frequency domain;
FIG. 7 is a diagram of a variation of a channel of a reference signal port in frequency domain and corresponding resource patterns according to this application;
FIG. 8 is a diagram of channel components of a channel of a reference signal port and corresponding resource patterns according to this application;
FIG. 9 is a diagram of manifold metric results of frequency domain channel vectors of reference signal ports and corresponding resource patterns according to this application;
FIG. 10 is a diagram of a communication apparatus according to this application; and
FIG. 11 is a diagram of another communication apparatus according to this application.

## DESCRIPTION OF EMBODIMENTS

In embodiments of this application, "/" may represent an "or" relationship between associated objects. For example, A/B may represent A or B. "and/or" may be used to indicate that there are three relationships between associated objects. For example, A and/or B may represent the following three cases: Only A exists, both A and B exist, and only B exists, where A and B may be singular or plural. For ease of describing the technical solutions in embodiments of this application, in embodiments of this application, words such as "first" and "second" may be used to distinguish technical features with a same or similar function. The words such as "first" and "second" do not limit a quantity and an execution sequence, and the words such as "first" and "second" do not limit a definite difference. In embodiments of this application, the word such as "example" or "for example" is used to represent an example, evidence, or a description. Any embodiment or design solution described as "example" or "for example" should not be explained as being more preferred or having more advantages than another embodiment or design solution. A word such as "example" or "for example" is used to present a related concept in a specific manner for ease of understanding.

The following describes the technical solutions in embodiments of this application with reference to the accompanying drawings in embodiments of this application.

To resolve a bottleneck problem for obtaining channel state information at super high air interface overheads due to a sharply increasing quantity of reference signal ports, this application provides a reference signal configuration method. Reference signal resource configuration information configured in the method can adapt to a change of a frequency domain channel, to facilitate reduction of resource overheads of a reference signal and further facilitate improvement of system spectral efficiency.

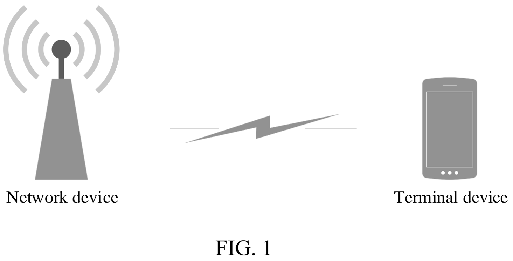

The reference signal configuration method provided in this application may be applied to a communication system shown in FIG. 1. For example, the communication system includes a network device and a terminal device.

The communication system in this application may include but is not limited to communication systems of various radio access technologies (radio access technologies, RATs), for example, an LTE communication system, or a 5G (or referred to as a new radio (new radio, NR)) communication system, or a transition system between an LTE communication system and a 5G communication system. The transition system may also be referred to as a 4.5G communication system. Certainly, the communication system may alternatively be a future communication system, for example, a 6th generation (6th generation, 6G) or even 7th generation (7th generation, 7G) system. The network architecture and the service scenario described in embodiments of this application are intended to describe the technical solutions in embodiments of this application more clearly, and do not constitute a limitation on the technical solutions provided in embodiments of this application. A person of ordinary skill in the art may learn that with evolution of communication network architectures and emergence of new service scenarios, the technical solutions provided in embodiments of this application are also applicable to similar technical problems.

The terminal device, also referred to as a user equipment (user equipment, UE), a mobile station (mobile station, MS), a mobile terminal (mobile terminal, MT), or the like, is a device that provides voice and/or data connectivity for a user, for example, a handheld device or a vehicle-mounted device having a wireless connection function. Currently, for example, the terminal device is a mobile phone (mobile phone), a tablet computer, a notebook computer, a palmtop computer, a mobile internet device (mobile internet device, MID), a wearable device, an uncrewed aerial vehicle, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal device in a 5G network, a terminal device in a future evolved PLMN network, a terminal device in a future communication system, or the like.

The network device in this application is a radio access network (radio access network, RAN) node (or device) that connects a terminal device to a wireless network, and may also be referred to as a base station. For example, the RAN node is a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), a satellite in a satellite communication system, a radio controller in a cloud radio access network (cloud radio access network, CRAN) scenario, a wearable device, an uncrewed aerial vehicle, a device in an internet of vehicles (for example, a vehicle-to-everything (vehicle-to-everything, V2X) device), a communication device in device-to-device (device-to-device, D2D) communication, or the like. In addition, in a network structure, the network device may include a central unit (central unit, CU) node, a distributed unit (distributed unit, DU) node, or a RAN device including the CU node and the DU node. The RAN device including the CU node and the DU node routes protocol layers of an eNB in a long term evolution (long term evolution, LTE) system. Functions of some protocol layers are centrally controlled by a CU, functions of some or all of remaining protocol layers are distributed in a DU, and the CU centrally controls the DU. In some deployments of the network device, the CU may be further divided into a CU-control plane (control plane, CP), a CU-user plane (user plan, UP), and the like. In some other deployments of the network device, the network device may alternatively be an antenna unit (radio unit, RU) or the like. In some still other deployments of the network device, the network device may alternatively be an open radio access network (open radio access network, ORAN) architecture or the like. A specific type of the network device is not limited in this application. For example, when the network device is of the ORAN architecture, the network device in embodiments of this application may be an access network device in an ORAN, a module in the access network device, or the like. In an ORAN system, a CU may also be referred to as an open (open, O)-CU, a DU may also be referred to as an O-DU, a CU-DU may also be referred to as an O-CU-DU, a CU-UP may also be referred to as an O-CU-UP, and an RU may also be referred to as an O-RU.

I. For ease of understanding, the following describes in detail definitions of related terms in this application.

1. Multiple-input multiple-output MIMO technology

MIMO (also referred to as a multiple-input multiple-output technology or a multi-antenna technology) is a core technology of 5G. A principle of MIMO is that a plurality of transmit antennas are used at a transmit end, and a plurality of receive antennas are used at a receive end, so that signals are transmitted and received by using the plurality of antennas at the transmit end and the receive end, thereby improving communication quality. By using this technology, spatial resources can be fully utilized, and multiple-transmit multiple-receive can be implemented by using a plurality of antennas. A system channel capacity can be improved manyfold without increasing spectrum resources and antenna transmit power. An essence of the MIMO technology is to provide a spatial diversity gain and a spatial multiplexing gain for a system.

2. Reference signal RS

The reference signal is a known signal provided by a transmit end to a receive end for channel estimation or channel sounding. For example, an NR reference signal may include but is not limited to a demodulation reference signal (demodulation reference signal, DMRS), a phase tracking reference signal (phase tracking reference signal, PTRS), a sounding reference signal (sounding reference signal, SRS), a channel state information reference signal (channel state information reference signal, CSI-RS), or a time/frequency tracking reference signal (time/frequency tracking reference signal, TRS).

(1) DMRS

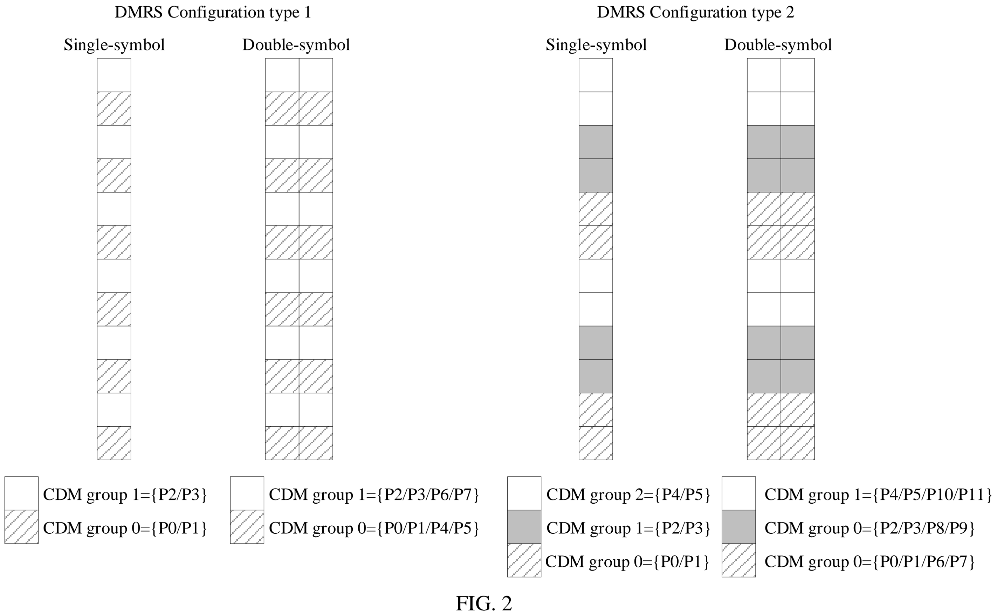

The DMRS is an important reference signal in NR, and is used by a receive end to perform channel estimation and physical channel demodulation. There are two different types of DMRSs: a configuration type 1 and a configuration type 2 respectively. The two types both support two quantities of DMRS symbols. Reference signals occupy single symbols and double symbols. For example, DMRS resource patterns (patterns) of the configuration type 1 and the configuration type 2 are shown in FIG. 2. In the configuration type 1, DMRS ports are divided into two code division multiplexing (code division multiplexing, CDM) groups. Code division multiplexing is used between intra-group ports, and a deviation of one subcarrier exists between the groups in frequency domain. A single-symbol DMRS supports four ports (ports) that are divided into two CDM groups: {P0, P1} and {P2, P3}, and a double-symbol DMRS supports eight ports that are divided into two CDM groups: {P0, P1, P4, P5} and {P2, P3, P6, P7}, as shown in FIG. 2. In the configuration type 2, DMRS ports are divided into three CDM groups. Code division multiplexing is used between intra-group ports, and a deviation of two subcarriers exists between the groups in frequency domain. A single-symbol DMSR supports six ports that are divided into three CDM groups: {P0, P1}, {P2, P3}, and {P4, P5}, and a double-symbol DMRS supports 12 ports that are divided into three CDM groups: {P0, P1, P6, P7}, {P2, P3, P8, P9}, and {P4, P5, P10, P11}, as shown in FIG. 2.

Currently, frequency domain resources of DMRS ports are uniformly distributed, and a frequency domain resource density is high. To satisfy channel measurement of ultra multiple streams (for example, more than 300 user flows) in a 6G system, time-frequency resource overheads (or air interface resource overheads) are huge, and an air interface resource cannot support such a large quantity of ports. For example, it is assumed that one transmission time interval (transmission time interval, TTI) and a full bandwidth indicate 100% of time-frequency resources. In this case, measurement of only a maximum of 84 DMRS ports can be supported. If measurement of more than 300 DMRS ports needs to be satisfied, required time-frequency resources reach 357.1%. This cannot be supported. Reduction of a frequency-domain density of the DMRS ports causes a large performance loss (for example, a throughput may be reduced by 66%).

(2) SRS

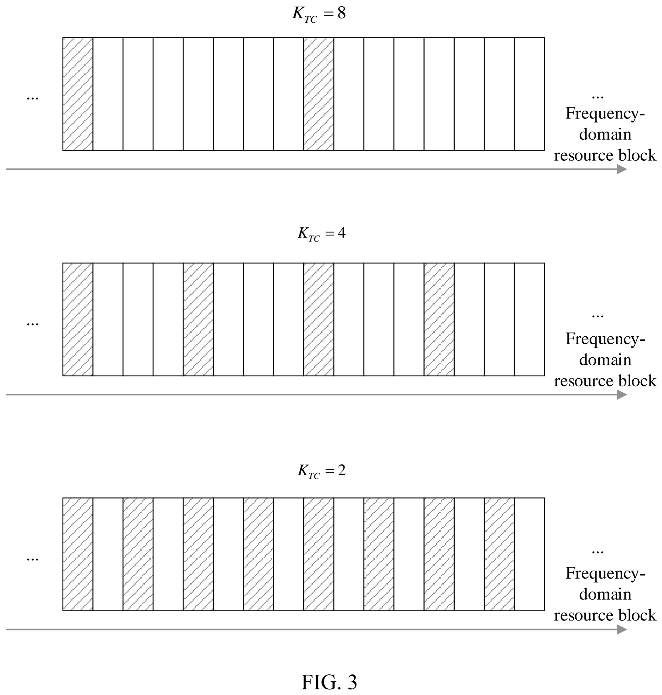

The SRS is an important reference signal in NR. A base station may evaluate an uplink channel parameter by using the SRS. For a time division duplexing (time division duplexing, TDD) system, the base station may also evaluate a downlink channel parameter based on channel reciprocity by using the SRS. According to the NR protocol, the SRS is sent in a comb (Comb) manner in frequency domain. To be specific, for an antenna port, an SRS is sent on every $K_{TC}$ subcarrier in frequency domain, and frequency domain resources are uniformly distributed, as shown in FIG. 3. For example, a transmission comb (transmission comb, TC) density $K_{TC}$ may be configured as 2, 4, or 8, as shown in FIG. 3. For an antenna port, after the transmission comb density $K_{TC}$ is determined, a transmission comb offset combOffset needs to be configured. For example, when $K_{TC} = 2$, combOffset is {0, 1}; when $K_{TC} = 4$, combOffset is {0, 1, 2, 3}; or when $K_{TC} = 8$, comboffset is {0, 1, 2, 3, 4, 5, 6, 7}. Different comb offsets may be configured for different UEs, to implement frequency division multiplexing on different subcarriers. According to the NR protocol, SRS frequency domain resource densities between ports of a UE are the same. NR SRS port resources are orthogonal. Frequency domain resources of each port are uniformly distributed. Resource densities between ports are the same.

Currently, frequency domain resources of SRS ports are uniformly distributed, and a frequency domain resource density is high. To satisfy channel measurement of ultra multiple users (for example, more than 30 users) and ultra multiple antenna ports (for example, more than 900 ports) in a 6G system, time-frequency resource overheads (or air interface resource overheads) are huge. For example, it is assumed that a quantity of UEs is 30, and a quantity of antenna ports of each UE is at least 30. In this case, a total quantity of SRS antenna ports is at least 900. It is assumed that an SRS resource configuration is a transmission comb density $K_{TC} = 4$ and a maximum number of cyclic shifts (maximum number of cyclic shifts) $n_{SRS}^{cs,\max} = 12$. In this case, all time-frequency resources included in a full bandwidth in frequency domain and 19 time-frequency symbols (symbols) are needed, and resource overheads are huge. Direct reduction of a frequency-domain density of the SRS ports causes a large performance loss (for example, a throughput may be reduced by 7% to 20%).

(3) CSI-RS

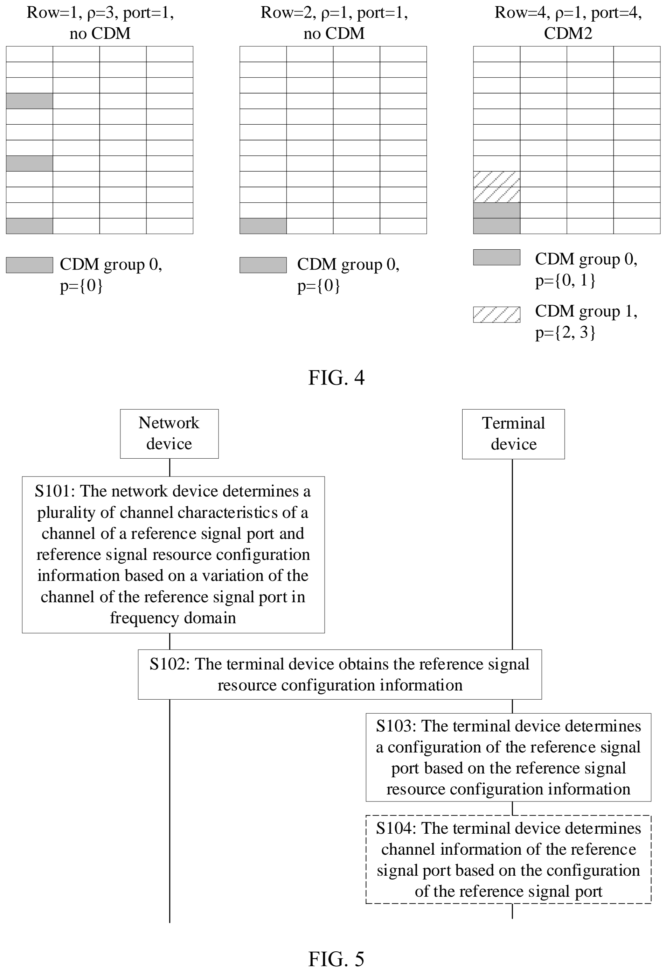

The CSI-RS is an important reference signal in NR, and is used for CSI measurement and reporting a channel quality indicator (channel quality indicator, CQI), a rank indicator (rank indicator, RI), and a precoding matrix indicator (precoding matrix indicator, PMI). CSI-RS time-frequency resource mapping uses a component CSI-RS resource element pattern (component CSI-RS RE (resource element) pattern) as a unit. The component CSI-RS RE pattern is defined as Y consecutive REs in frequency domain and Z consecutive symbols in time domain in a physical resource block (physical resource block, PRB). Currently, (Y, Z) combinations supported by the protocol are (1, 1), (2, 1), (2, 2), and (2, 4). The component CSI-RS RE pattern is mapped to Y*Z ports through CDM (including frequency division CDM (frequency division CDM, FD-CDM) and time division CDM (time division CDM, TD-CDM)). In a corresponding protocol, four types of CDM are supported: no CDM, CDM2, CDM4, and CDM8 that are indicated by a radio resource control (radio resource control, RRC) parameter cdmType. In addition, a base station may configure a quantity of repetitions of the component CSI-RS RE pattern in frequency domain by configuring a frequency domain density $\rho$, where the frequency domain density $\rho$ indicates one repetition every $1/\rho$ RBs. For example, FIG. 4 is a diagram of a CSI-RS time-frequency resource pattern (pattern). NR CSI-RS port resources are orthogonal. Frequency domain resources of each port are uniformly distributed. Resource densities between ports are the same.

Currently, frequency domain resources of CSI-RS ports are uniformly distributed, and a frequency domain resource density is high. To satisfy channel measurement of ultra multiple antenna ports (for example, more than 1000 ports) in a 6G system, time-frequency resource overheads (or air interface resource overheads) are huge and even cannot be measured. Reduction of a frequency-domain density of the CSI-RS ports causes a large performance loss.

It should be noted that for "sending information/data to A" and "sending information/data" in this application, "sending to A" and "sending" merely indicate a direction of information/data transmission, A is a destination, and "sending information/data to A" is not limited to sending on an air interface. "Sending information/data to A" includes directly sending information/data to A and indirectly sending information/data to A. Therefore, "sending information/data to A" may also be understood as "outputting information/data to A" by a communication interface of a processing unit. Similarly, "sending information/data" may also be understood as "outputting information/data".

Similarly, "receiving information/data from A" and "receiving information/data" merely indicate a direction of information/data transmission. "From A" indicates that a source of the information/data is A. This includes directly receiving information/data from A and indirectly receiving information/data from A. Therefore, "receiving information/data from A" may also be understood as "inputting information/data from A" by a communication interface of a processing unit. Similarly, "receiving information/data from A" may also be understood as "inputting information/data".

It should be noted that, in this application, an "indication" may include a direct indication, an indirect indication, an explicit indication, or an implicit indication. When a case in which a specific piece of indication information indicates A is described, this may be understood as the following cases: the indication information carries A, or directly/indirectly indicates A, or explicitly/implicitly indicates A.

II. This application provides a reference signal configuration method:

FIG. 5 schematic flowchart of a reference signal configuration method according to this application. The reference signal configuration method is applied to the communication system shown in FIG. 1. For example, the reference signal configuration method may be implemented through interaction between a network device and a terminal device, and includes the following steps:

S101: The network device determines a plurality of channel characteristics of a channel of a reference signal port and reference signal resource configuration information based on a variation of the channel of the reference signal port in frequency domain.

The variation of the channel of the reference signal port in frequency domain means a change of a channel response in frequency domain with the reference signal port. Specifically, the channel response may be a channel response on a pair of transmit and receive antenna ports. The change of the channel response in frequency domain with the reference signal port may be a change of one or more parameters such as a channel amplitude response, a channel phase response, a channel power response, and a channel energy response in frequency domain with the reference signal port. Alternatively, the variation of the channel of the reference signal port in frequency domain is a change of a channel vector formed by channel responses on one transmit antenna port and a plurality of receive antenna ports in frequency domain. Optionally, the reference signal in this application may include but is not limited to the DMRS, the SRS, the CSI-RS, and the like described above.

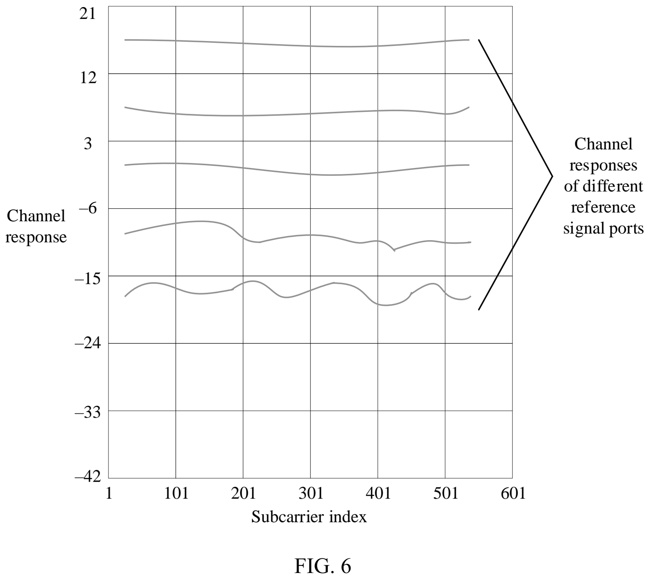

For example, FIG. 6 is a diagram of a variation of a channel of a reference signal port in frequency domain. The diagram includes variations of channels of a plurality of reference signal ports in frequency domain. It can be learned that variations of channels of all reference signal ports in frequency domain may be different (the channels change fast and slowly in frequency domain); and changes of channels of different reference signal ports in frequency domain may be the same, similar, or totally different. Therefore, to satisfy a flexible configuration of all ports, the network device may determine the plurality of channel characteristics of the channel of the reference signal port and the reference signal resource configuration information based on the variation of the channel of the reference signal port in frequency domain. The variation of the channel in frequency domain may be divided into a plurality of channel parts that respectively correspond to or are the plurality of channel characteristics. The plurality of channel characteristics reflect that the channel of the reference signal port changes fast and slowly in frequency domain. For example, the plurality of channel characteristics may be a slow-change characteristic in frequency domain or a fast-change characteristic in frequency domain, or may be a common characteristic of the plurality of reference signal ports or a specified characteristic of the reference signal port. Specifically, dividing the variation of the channel in the frequency domain into the plurality of channel parts may be dividing the change in frequency domain into a plurality of areas (for example, analyzing the variation of the channel in frequency domain by using a manifold metric method), or dividing the change in entire frequency domain into a plurality of components (for example, analyzing the variation of the channel in frequency domain by using a channel component decomposition method).

Optionally, the plurality of channel characteristics of the channel of the reference signal port may also be represented by parameters such as a periodicity of the variation of the channel of the reference signal port in frequency domain and a value of a variation on a unit bandwidth. For example, a first channel characteristic of the channel of the reference signal port is a first periodicity of the variation in frequency domain, and a second channel characteristic is a second periodicity of the variation in frequency domain. For another example, a first channel characteristic of the channel of the reference signal port is a first variation on a unit bandwidth, and a second channel characteristic is a second variation on a unit bandwidth.

The reference signal resource configuration information indicates a first resource pattern (pattern#1) of the reference signal port, and the first resource pattern is associated with a first channel characteristic in the plurality of channel characteristics. For example, it is assumed that the channel of the reference signal port may be divided into two channel parts. A first channel part changes slowly in frequency domain and corresponds to the first channel characteristic (for example, a slow-change characteristic in frequency domain). A second channel part changes fast in frequency domain and corresponds to the second channel characteristic (for example, a fast-change characteristic in frequency domain). In consideration of resource overheads and/or weights of channel parts, the network device may determine the reference signal resource configuration information to indicate the first resource pattern corresponding to the first channel characteristic (for example, frequency domain resource distribution corresponding to the first resource pattern is low in a frequency domain resource density, and uniform or nonuniform). Optionally, the reference signal resource configuration information further indicates a second resource pattern (pattern#2) of the reference signal port, and the second resource pattern is associated with a second channel characteristic in the plurality of channel characteristics. For example, it is assumed that the channel of the reference signal port may be divided into two channel parts. A first channel part changes slowly in frequency domain and corresponds to the first channel characteristic (for example, a slow change). A second channel part changes fast in frequency domain and corresponds to the second channel characteristic (for example, a fast change). The network device may determine that the reference signal resource configuration information indicates the first resource pattern corresponding to the first channel characteristic (for example, frequency domain resource distribution corresponding to the first resource pattern is low in a frequency domain resource density, and uniform or nonuniform) and the second resource pattern corresponding to the second channel characteristic (for example, frequency domain resource distribution corresponding to the second resource pattern is high in a frequency domain resource density, and uniform or nonuniform).

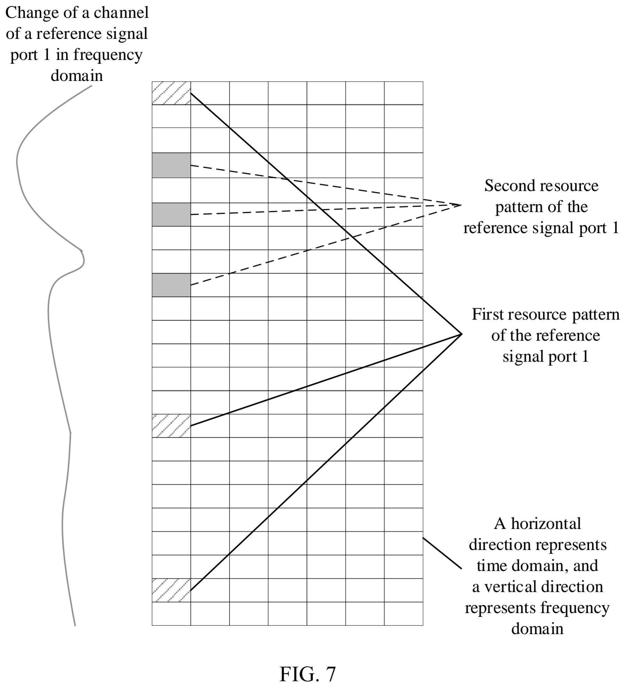

For example, FIG. 7 is a diagram of a variation of a channel of a reference signal port in frequency domain and corresponding resource patterns according to this application. It is assumed that the reference signal port is a port 1 (port_1), and a curve on the left of FIG. 7 reflects a change of a channel of port_1 in frequency domain. It can be learned that the channel of port_1 changes slowly in frequency domain in one segment (where the curve has a smaller bending degree, for example, the first channel characteristic), and changes fast in another segment (where the curve has a larger bending degree, for example, the second channel characteristic). The reference signal resource configuration information of the reference signal port indicates the first resource pattern and the second resource pattern. The first resource pattern is shown by using hatched grids on the right of FIG. 7. The frequency domain resource distribution corresponding to the first resource pattern is nonuniform and is low in the frequency domain resource density. The second resource pattern is shown by using gray grids on the right of FIG. 7. The frequency domain resource distribution corresponding to the second resource pattern is nonuniform and is high in the frequency domain resource density. Optionally, the first resource pattern and the second resource pattern have different locations in frequency domain. This may be determined in a channel component decomposition manner, or may be determined in a manifold metric manner.

Specifically, the first resource pattern and the second resource pattern have the following several characteristics: Characteristic 1: The first resource pattern and the second resource pattern have different densities and/or different locations in frequency domain.

For example, the first resource pattern and the second resource pattern of the port 1 shown in FIG. 7 have different locations and different densities in frequency domain.

Characteristic 2: A quasi co-location (quasi co location, QCL) relationship exists between a first resource corresponding to the first resource pattern and a second resource corresponding to the second resource pattern.

For example, a large-scale channel characteristic corresponding to the first resource pattern is the same as a large-scale channel characteristic corresponding to the second resource pattern. The large-scale channel characteristic corresponding to the second resource pattern is deduced from the large-scale channel characteristic corresponding to the first resource pattern, or the large-scale channel characteristic corresponding to the first resource pattern is deduced from the large-scale channel characteristic corresponding to the second resource pattern.

Characteristic 3: The first resource pattern is a common resource pattern of a plurality of reference signal ports, and the second resource pattern is a specified resource pattern of the reference signal port; or the first resource pattern is a specified resource pattern of the reference signal port, and the second resource pattern is a common resource pattern of a plurality of reference signal ports.

For example, the first resource pattern may be common/port-group (that is, the common resource pattern), and the second resource pattern may be port-specific (that is, the specified resource pattern). Alternatively, the first resource pattern may be port-specific (that is, the specified resource pattern), and the second resource pattern may be common/-port-group (that is, the common resource pattern). In other words, the two resource patterns respectively represent two types of patterns.

Characteristic 4: A first variation corresponding to the first resource pattern in the variation of the channel of the reference signal port in frequency domain is less than or equal to a first threshold, a second variation corresponding to the second resource pattern in the variation of the channel of the reference signal port in frequency domain is greater than or equal to a second threshold, and the first threshold is less than the second threshold; or a first variation corresponding to the first resource pattern in the variation of the channel of the reference signal port in frequency domain is greater than or equal to a first threshold, a second variation corresponding to the second resource pattern in the variation of the channel of the reference signal port in frequency domain is less than or equal to a second threshold, and the first threshold is greater than the second threshold.

For example, when the first threshold is less than the second threshold, the first variation corresponding to the first resource pattern is less than or equal to the first threshold (that is, a slow change in frequency domain), and the second variation corresponding to the second resource pattern is greater than or equal to the second threshold (that is, a fast change in frequency domain). Alternatively, when the first threshold is greater than the second threshold, the first variation corresponding to the first resource pattern is greater than or equal to the first threshold (that is, a fast change in frequency domain), and the second variation corresponding to the second resource pattern is less than or equal to the second threshold (that is, a slow change in frequency domain).

Specifically, that the network device determines the plurality of channel characteristics of the channel of the reference signal port and the reference signal resource configuration information in S101 may be implemented in the following manners:

Implementation 1: The network device determines the plurality of channel characteristics of the channel of the reference signal port and the reference signal resource configuration information based on channel components of the channel of the reference signal port.

The network device may perform channel component decomposition on the channel of the reference signal port, to decompose the channel into a plurality of different channel components and weight coefficients corresponding to the channel components. One channel component corresponds to one channel characteristic, or one channel component is one channel characteristic. Specifically, Implementation 1 includes the following several cases:

Case 1: One channel component corresponds to one channel characteristic.

When the channel components of the reference signal port include the plurality of channel components, and only a resource pattern corresponding to one channel characteristic is determined, S101 specifically includes the following procedure:

(1) The network device performs component decomposition on the variation of the channel of the reference signal port in frequency domain, to obtain a first channel component and a second channel component, where the first channel component corresponds to the first channel characteristic, and the second channel component corresponds to the second channel characteristic.

(2a) The network device determines, based on a preset mapping relationship between a channel characteristic and a resource pattern, the first resource pattern corresponding to the first channel characteristic.

Alternatively, the following step is performed. (2b) The network device determines, based on a predefined algorithm for determining a resource pattern based on a channel characteristic, the first resource pattern corresponding to the first channel characteristic.

For example, the network device performs channel component decomposition on the channel of the reference signal port by using a decomposition method such as empirical mode decomposition (empirical mode decomposition, EMD) or wavelet analysis, to obtain the first channel component and the second channel component that are included in the channel components of the reference signal port. The first channel component corresponds to the first channel characteristic, and the second channel component corresponds to the second channel characteristic. Because a correspondence exists between a channel component and a channel characteristic, and the mapping relationship exists between a channel characteristic and a resource pattern, the network device may determine the corresponding first resource pattern based on the first channel characteristic, to determine the first resource pattern corresponding to the first channel component. For example, it is assumed that the first channel characteristic corresponding to the first channel component indicates that the channel of the reference signal port changes slowly in frequency domain. In this case, the network device may determine that a channel corresponding to the first resource pattern in frequency domain also has a slow-change characteristic in frequency domain. The first resource pattern is sparse in frequency domain. Optionally, although the network device obtains the plurality of channel components and the plurality of channel characteristics through decomposition, in consideration of the resource overheads and/or the weights of the channel components, the network device may determine only the first resource pattern corresponding to the first channel characteristic, thereby facilitating reduction of air interface overheads and implementing a flexible reference signal resource configuration. Optionally, the foregoing steps (2a) and (2b) are several possible implementations of a same step, and only one of the steps needs to be performed. For example, steps (1) and (2a) are performed, or steps (1) and (2b) are performed.

Optionally, the preset mapping relationship may exist between a channel characteristic and a resource pattern. For example, a protocol predefines the mapping relationship between a channel characteristic and a resource pattern, and the network device may determine, based on the mapping relationship, the first resource pattern corresponding to the first channel characteristic. Optionally, the protocol predefines the algorithm for determining a resource pattern based on a channel characteristic, and the network device may obtain, through calculation based on the predefined algorithm, the first resource pattern corresponding to the first channel characteristic. A specific implementation of the mapping relationship between a channel characteristic and a resource pattern or the algorithm for determining a resource pattern based on a channel characteristic is not limited in this application. For example, the mapping relationship between a channel characteristic and a resource pattern may be prestored in the network device in a form of a table to facilitate a query performed by the network device; or may be prestored on the cloud, so that the network device queries and obtains the mapping relationship from the cloud each time the mapping relationship is to be used. This is not limited in this application.

When the channel components of the reference signal port include the first channel component and the second channel component, and resource patterns corresponding to a plurality of channel characteristics are determined, S101 specifically includes the following procedure:

(1) The network device performs component decomposition on the variation of the channel of the reference signal port in frequency domain, to obtain a first channel component and a second channel component, where the first channel component corresponds to the first channel characteristic, and the second channel component corresponds to the second channel characteristic.

(2a) The network device determines, based on a preset mapping relationship between a channel characteristic and a resource pattern, the first resource pattern corresponding to the first channel characteristic and the second resource pattern corresponding to the second channel characteristic.

Alternatively, the following step is performed. (2b) The network device determines, based on a predefined algorithm for determining a resource pattern based on a channel characteristic, the first resource pattern corresponding to the first channel characteristic and the second resource pattern corresponding to the second channel characteristic.

For example, the network device performs channel component decomposition on the channel of the reference signal port by using a decomposition method such as EMD or wavelet analysis, to obtain the first channel component and the second channel component that are included in the channel components of the reference signal port. A correspondence exists between the first channel component and the first channel characteristic. A correspondence exists between the second channel component and the second channel characteristic. The mapping relationship exists between a channel characteristic and a resource pattern. In this case, the network device may determine the corresponding first resource pattern based on the first channel characteristic, and determine the corresponding second resource pattern based on the second channel characteristic, to determine the first resource pattern corresponding to the first channel component and the second resource pattern corresponding to the second channel component. In other words, the network device determines a corresponding resource pattern based on a channel component of the channel of the reference signal port.

Optionally, when channel component decomposition is performed on the channel of the reference signal port to obtain the plurality of channel components, each channel component may be associated with a respective weight coefficient, and the weight coefficient represents importance of the channel component. For example, a first weight coefficient represents importance of the first channel component, and a second weight coefficient represents importance of the second channel component. For example, it is assumed that the variation of the channel of the reference signal port in frequency domain is denoted as $H_1(f)$, and $H_1(f)$ includes the first channel component $H_{1,1}(f)$ and the second channel component $H_{1,2}(f)$. Optionally, $H_1(f)$ further includes a residual channel component $H_{1,residual}(f)$ other than the first channel component and the second channel component. It is assumed that weight coefficients associated with the channel components are respectively $a_{1,1}, a_{1,2}, a_{1,residual}$. The channel components and the weight coefficients of the channel of the reference signal port satisfy Formula (1):

$$H_1\left(f\right) = a_{1,1}H_{1,1}\left(f\right) + a_{1,2}H_{1,2}\left(f\right) + a_{1,\text{residual}}H_{1,\text{residual}}\left(f\right) \quad (1)$$

The first channel component $H_{1,1}(f)$ is associated with the first weight coefficient $a_{1,1}$, and the second channel component $H_{1,2}(f)$ is associated with the second weight coefficient $a_{1,2}$. Optionally, Formula (1) may not include the item $a_{1,residual}H_{1,residual}(f)$. The network device may determine the first channel characteristic based on $H_{1,1}(f)$, to determine the first resource pattern; and may determine the second channel characteristic based on $H_{1,2}(f)$, to determine the second resource pattern.

Optionally, the network device may further dynamically determine whether to enable (enable) or disable (disable) a resource pattern based on a weight coefficient of a channel component. For example, the network device enables the second resource pattern when the second weight coefficient is greater than or equal to a weight coefficient threshold; or the network device disables the second resource pattern when the second weight coefficient is less than a weight coefficient threshold. In other words, when the second resource pattern is the specified resource pattern of the reference signal port, the network device may flexibly enable or disable the second resource pattern. This helps adapt to a channel change characteristic of the port.

Case 2: One channel component is one channel characteristic.

When the channel components of the reference signal port include the plurality of channel components, it is assumed that the mapping relationship exists between a channel component and a resource pattern, or the mapping relationship exists between a metric parameter of a channel component and a resource pattern in this application. In this case, S101 specifically includes the following procedure:

(1) The network device performs component decomposition on the variation of the channel of the reference signal port in frequency domain, to obtain the first channel component and the second channel component, where the first channel component is the first channel characteristic, and the second channel component is the second channel characteristic.

(2a) The network device determines, based on a preset mapping relationship between a channel component and a resource pattern, the first resource pattern corresponding to the first channel component.

Alternatively, the following step is performed. (2b) The network device determines, based on a predefined algorithm for determining a resource pattern based on a channel component, the first resource pattern corresponding to the first channel component.

Alternatively, the following step is performed. (2c) The network device determines, based on a preset mapping relationship between a metric parameter of a channel component and a resource pattern, the first resource pattern corresponding to the first channel component, where the metric parameter includes a metric threshold or a metric threshold interval.

For example, the network device performs channel component decomposition on the channel of the reference signal port by using a decomposition method such as EMD or wavelet analysis, to obtain the first channel component and the second channel component that are included in the channel components of the reference signal port. The first channel component is the first channel characteristic (for example, the first channel component has a slow-change channel characteristic in frequency domain), and the mapping relationship exists between a channel component and a resource pattern. In this case, the network device may determine the corresponding first resource pattern based on the first channel component. In other words, the network device determines a corresponding resource pattern based on a channel component of the channel of the reference signal port. Optionally, a plurality of channel components and a plurality of channel characteristics are obtained through decomposition, in consideration of resource overheads and/or weights of the channel components, the network device may determine only the first resource pattern corresponding to the first channel component, thereby facilitating reduction of air interface overheads and implementing a flexible reference signal resource configuration. Optionally, the preset mapping relationship may exist between a channel component and a resource pattern, or the preset mapping relationship may exist between a metric parameter and a resource pattern. For example, a protocol predefines the mapping relationship between a channel component and a resource pattern, and the network device may determine, based on the mapping relationship, the first resource pattern corresponding to the first channel component. For another example, a protocol predefines the mapping relationship between a metric parameter of a channel component and a resource pattern. In this case, the network device may first determine the metric threshold or the metric threshold interval that the channel component satisfies, and then determine, based on the mapping relationship between a metric parameter and a resource pattern, the first resource pattern corresponding to the first channel component. Optionally, the protocol predefines the algorithm for determining a resource pattern based on a channel component, and the network device may obtain, through calculation based on the predefined algorithm, the first resource pattern corresponding to the first channel component. A specific implementation of the mapping relationship between a channel component and a resource pattern, or the mapping relationship between a metric parameter of a channel component and a resource pattern, or the algorithm for determining a resource pattern based on a channel component is not limited in this application. For example, the mapping relationship between a channel component and a resource pattern may be prestored in the network device in a form of a table to facilitate a query performed by the network device; or may be prestored on the cloud, so that the network device queries and obtains the mapping relationship from the cloud each time the mapping relationship is to be used. This is not limited in this application. Optionally, the foregoing steps (2a) to (2c) are several possible implementations of a same step, and only one of the steps needs to be performed. For example, steps (1) and (2a) are performed, or steps (1) and (2b) are performed, or steps (1) and (2c) are performed.

When the channel components of the reference signal port include the first channel component and the second channel component, S101 specifically includes the following procedure:

(1) The network device performs component decomposition on the variation of the channel of the reference signal port in frequency domain, to obtain the first channel component and the second channel component, where the first channel component is the first channel characteristic, and the second channel component is the second channel characteristic.

(2a) The network device determines, based on a preset mapping relationship between a channel component and a resource pattern, the first resource pattern corresponding to the first channel component and the second resource pattern corresponding to the second channel component.

Alternatively, the following step is performed. (2b) The network device determines, based on a predefined algorithm for determining a resource pattern based on a channel component, the first resource pattern corresponding to the first channel component and the second resource pattern corresponding to the second channel component.

Alternatively, the following step is performed. (2c) The network device determines, based on a preset mapping relationship between a metric parameter of a channel component and a resource pattern, the first resource pattern corresponding to the first channel component and the second resource pattern corresponding to the second channel component, where the metric parameter includes a metric threshold or a metric threshold space.

For example, the network device performs channel component decomposition on the channel of the reference signal port by using a decomposition method such as EMD or wavelet analysis, to obtain the first channel component and the second channel component that are included in the channel components of the reference signal port. The mapping relationship exists between a channel component and a resource pattern. The network device may determine the corresponding first resource pattern based on the first channel component, and determine the corresponding second resource pattern based on the second channel component. Optionally, when channel component decomposition is performed on the channel of the reference signal port to obtain the plurality of channel components, each channel component may be associated with a respective weight coefficient, and the weight coefficient represents importance of the channel component. For an expression of the channel component and the weight coefficient and an example for description, refer to the corresponding descriptions in Case 1 in Implementation 1. Details are not described herein again.

Optionally, the network device may preset a common resource pattern set of a group of reference signal ports, where a mapping relationship exists between the resource pattern set and a group of determined channel components. The first channel component has a first index value in the resource pattern set, and the second channel component has a second index value in the resource pattern set. The first index value indicates the first resource pattern, and the second index value indicates the second resource pattern. The network device may search the common resource pattern set of the reference signal port for the first resource pattern and the second resource pattern based on the index values. Optionally, the terminal device may obtain the common resource pattern set, and search the common resource pattern set for the first resource pattern and the second resource pattern based on the first index value and the second index value.

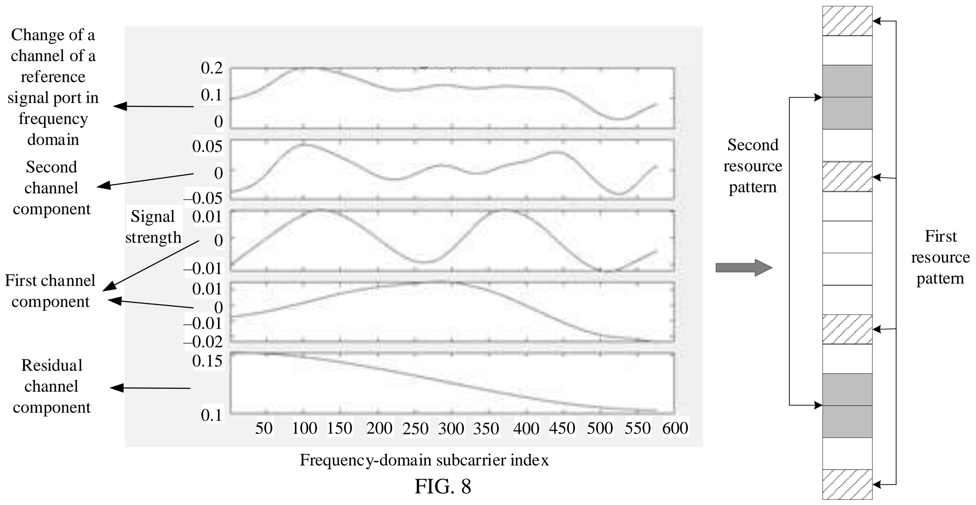

Based on the description of Implementation 1 above, the following describes the relationship between the channel component of the channel of the reference signal port and the resource pattern by using a diagram. For example, FIG. 8 is a diagram of channel components of a channel of a reference signal port and corresponding resource patterns according to this application. The left of FIG. 8 shows a change of the channel of the reference signal port in frequency domain and the plurality of channel components obtained after channel decomposition. A horizontal coordinate represents an index of a frequency domain subcarrier, and a vertical coordinate represents signal strength (for example, signal strength between a pair of transmit and receive antennas). The variation of the channel of the reference signal port in frequency domain, the first channel component, the second channel component, and the residual channel component are shown on the left of FIG. 8. The network device may determine the first resource pattern and the second resource pattern based on the first channel component, the second channel component, and the mapping relationship between a channel component and a resource pattern, as shown on the right of FIG. 8. It can be learned that the first resource pattern and the second resource pattern have different densities and/or different locations.

Implementation 2: The network device determines the plurality of channel characteristics of the channel of the reference signal port and the reference signal resource configuration information based on a manifold metric result of a frequency domain channel vector of the reference signal port.

The network device may perform manifold structure and manifold metric analysis on the frequency domain channel vector of the reference signal port, to measure the variation of the channel of the reference signal port. The frequency domain channel vector of the reference signal port may be a channel vector of one transmit port and all receive ports at a current moment (that is, a channel vector of a one-transmit multiple-receive port). The manifold structure used in this application may include but is not limited to Grassmann, Stiefel, Riemannian manifold, and the like. The manifold metric used in this application may include but is not limited to a chord distance, a tangent spatial distance, a geodetic distance, and the like. For example, it is assumed that a Grassmann manifold structure is used, and a Grassmann manifold is a set of subspaces spanned by columns of a matrix X, where $\{X \in C^{n*p}|X^HX = I\}$, X represents the channel vector of the reference signal port, $C^{n*p}$ represents an n*p complex matrix set, and I represents a unit matrix. The frequency domain channel vector of the reference signal port may form a Grassmann manifold, and the change of the channel vector in frequency domain may be described by using a manifold metric. Using the manifold metric to describe the change of the channel is implemented through measuring channel vector similarity.

For example, the change of the channel vector in frequency domain is divided into a plurality of areas for measurement, and measurement results of the areas are classified into a first manifold metric result and a second manifold metric result according to the characteristics. For an area, if manifold metric results of all ports are the same or similar, a measurement result obtained after the division into areas is the first manifold metric result, and a mode corresponding to the first manifold metric result is a common mode (that is, the first manifold metric result has a common characteristic). For an area, if manifold metric results of all ports differ greatly, a measurement result obtained after the division into areas is the second manifold metric result, and a mode corresponding to the second manifold metric result is a port-specified mode (that is, the second manifold metric result has a port-specified characteristic). Optionally, for an area, if the measurement result shows that the channel changes fast in frequency domain, the measurement result is the second manifold metric result. For an area, if the measurement result shows that the channel changes slowly in frequency domain, the measurement result is the first manifold metric result. The network device determines the resource pattern based on the manifold structure and the manifold metric result or the channel characteristic. It is assumed that the metric is a chord distance/tangent spatial distance, and the manifold metric result is a large chord distance/tangent spatial distance. This indicates a fast-change channel characteristic of a channel. The network device may configure a high pilot density (for example, configure a high density of the first resource pattern).

Specifically, Implementation 2 includes the following several cases:

Case 1: One manifold metric result corresponds to one channel characteristic.

When the manifold metric result of the reference signal port includes the first manifold metric result and the second manifold metric result, and only a resource pattern corresponding to one channel characteristic is determined, S101 specifically includes the following procedure:

(1) The network device performs manifold metric analysis on the frequency domain channel vector of the reference signal port, to obtain the first manifold metric result and the second manifold metric result that correspond to the frequency domain channel vector, where the first manifold metric result corresponds to the first channel characteristic, and the second manifold metric result corresponds to the second channel characteristic.
(2a) The network device determines, based on a preset mapping relationship between a channel characteristic and a resource pattern, the first resource pattern corresponding to the first channel characteristic.

Alternatively, the following step is performed. (2b) The network device determines, based on a predefined algorithm for determining a resource pattern based on a channel characteristic, the first resource pattern corresponding to the first channel characteristic.

For example, the network device uses a Grassmann manifold, describes the change of the frequency domain channel vector by using a manifold metric, and obtains the manifold metric result including the first manifold metric result (for example, the first manifold metric result is a small chord distance indicating a slow channel change) and the second manifold metric result. A correspondence exists between a manifold metric result and a channel characteristic (for example, if the first manifold metric result is a small chord distance, the corresponding first channel characteristic is a slow change; and if the second manifold metric result is a large chord distance, the corresponding second channel characteristic is a fast change). Because a mapping relationship exists between a channel characteristic and a resource pattern, the network device may determine the corresponding first resource pattern based on the first channel characteristic, to determine the first resource pattern corresponding to the first manifold metric result. In other words, the network device determines the corresponding resource pattern based on the manifold metric result of the frequency domain channel vector of the reference signal port. Optionally, although a plurality of manifold metric results and a plurality of channel characteristics are obtained through analysis, in consideration of resource overheads and/or weights of the manifold metric results, the network device may determine only the first resource pattern corresponding to the first channel characteristic, thereby facilitating reduction of air interface overheads and implementing a flexible reference signal resource configuration. Optionally, a preset mapping relationship may exist between a channel characteristic and a resource pattern; or a protocol predefines an algorithm for determining a resource pattern based on a channel characteristic. For a specific implementation, refer to the corresponding description in Case 1 in Implementation 1. Details are not described herein again.

When the manifold metric result of the reference signal port includes the first manifold metric result and the second manifold metric result, and resource patterns corresponding to a plurality of channel characteristics are determined, S101 specifically includes the following procedure:

(1) The network device performs manifold metric analysis on the frequency domain channel vector of the reference signal port, to obtain the first manifold metric result and the second manifold metric result that correspond to the frequency domain channel vector, where the first manifold metric result corresponds to the first channel characteristic, and the second manifold metric result corresponds to the second channel characteristic.

(2a) The network device determines, based on a preset mapping relationship between a channel characteristic and a resource pattern, the first resource pattern corresponding to the first channel characteristic and the second resource pattern corresponding to the second channel characteristic.

Alternatively, the following step is performed. (2b) The network device determines, based on a predefined algorithm for determining a resource pattern based on a channel characteristic, the first resource pattern corresponding to the first channel characteristic and the second resource pattern corresponding to the second channel characteristic.

For example, the network device uses a Grassmann manifold, describes the change of the frequency domain channel vector by using a manifold metric, and obtains the manifold metric result including the first manifold metric result (for example, the first manifold metric result is a small chord distance indicating a slow channel change) and the second manifold metric result (for example, the second manifold metric result is a large chord distance indicating a fast channel change). A correspondence exists between the first channel manifold metric result and the first channel characteristic. A correspondence exists between the second channel manifold metric result and the second channel characteristic. The mapping relationship exists between a channel characteristic and a resource pattern. In this case, the network device may determine the corresponding first resource pattern based on the first channel characteristic, and determine the corresponding second resource pattern based on the second channel characteristic, to determine the first resource pattern corresponding to the first manifold metric result and the second resource pattern corresponding to the second manifold metric result. In other words, the network device determines a corresponding resource pattern based on a manifold metric result of the frequency domain channel vector of the reference signal port. Optionally, a preset mapping relationship may exist between a channel characteristic and a resource pattern; or a protocol predefines an algorithm for determining a resource pattern based on a channel characteristic. For a specific implementation, refer to the corresponding description in Case 1 in Implementation 1. Details are not described herein again.

Case 2: One manifold metric result is one channel characteristic.

When the manifold metric result of the reference signal port includes the first manifold metric result and the second manifold metric result, and only a resource pattern corresponding to one manifold metric result is determined, in this application, it is assumed that a mapping relationship exists between a manifold metric result and a resource pattern, or a mapping relationship exists between a metric threshold and a resource pattern. In this case, S101 specifically includes the following procedure:

(1) The network device performs manifold metric analysis on the frequency domain channel vector of the reference signal port, to obtain the first manifold metric result corresponding to the frequency domain channel vector, where the first manifold metric result is the first channel characteristic.

(2) The network device determines, based on a preset mapping relationship between a metric parameter and a resource pattern, the first resource pattern corresponding to the first manifold metric result.

For example, the network device uses a Grassmann manifold, describes the change of the frequency domain channel vector by using a manifold metric, and obtains the manifold metric result as the first manifold metric result (for example, the first manifold metric result is a small chord distance indicating a slow channel change). It is assumed that the preset mapping relationship exists between a metric parameter and a resource pattern. For example, a protocol predefines a mapping relationship between a metric threshold and a resource pattern, or presets a mapping relationship between a metric threshold interval and a resource pattern. In this case, the network device may determine a metric threshold that the first manifold metric result satisfies, to determine, based on the mapping relationship, the first resource pattern corresponding to the metric threshold that the first manifold metric result satisfies. A specific implementation of the mapping relationship between a metric parameter and a resource pattern is not limited in this application. For example, the mapping relationship between a metric parameter and a resource pattern may be prestored in the network device in a form of a table to facilitate a query performed by the network device; or may be prestored on the cloud, so that the network device queries and obtains the mapping relationship from the cloud each time the mapping relationship is to be used. This is not limited in this application.

When the manifold metric result of the reference signal port includes the first manifold metric result and the second manifold metric result, and a plurality of resource patterns are determined based on a plurality of manifold metric results, S101 specifically includes the following procedure:

(1) The network device performs manifold metric analysis on the frequency domain channel vector of the reference signal port, to obtain the first manifold metric result and the second manifold metric result that correspond to the frequency domain channel vector, where the first manifold metric result is the first channel characteristic, and the second manifold metric result is the second channel characteristic.

(2) The network device determines, based on a preset mapping relationship between a metric parameter and a resource pattern, the first resource pattern corresponding to the first manifold metric result and the second resource pattern corresponding to the second manifold metric result.

For example, the network device uses a Grassmann manifold, describes the change of the frequency domain channel vector by using a manifold metric, and obtains the manifold metric result including the first manifold metric result (for example, the first manifold metric result is a small chord distance indicating a slow channel change) and the second manifold metric result (for example, the second manifold metric result is a large chord distance indicating a fast channel change). It is assumed that the preset mapping relationship exists between a metric parameter and a resource pattern. For a specific implementation, refer to the foregoing description. Details are not described herein again.

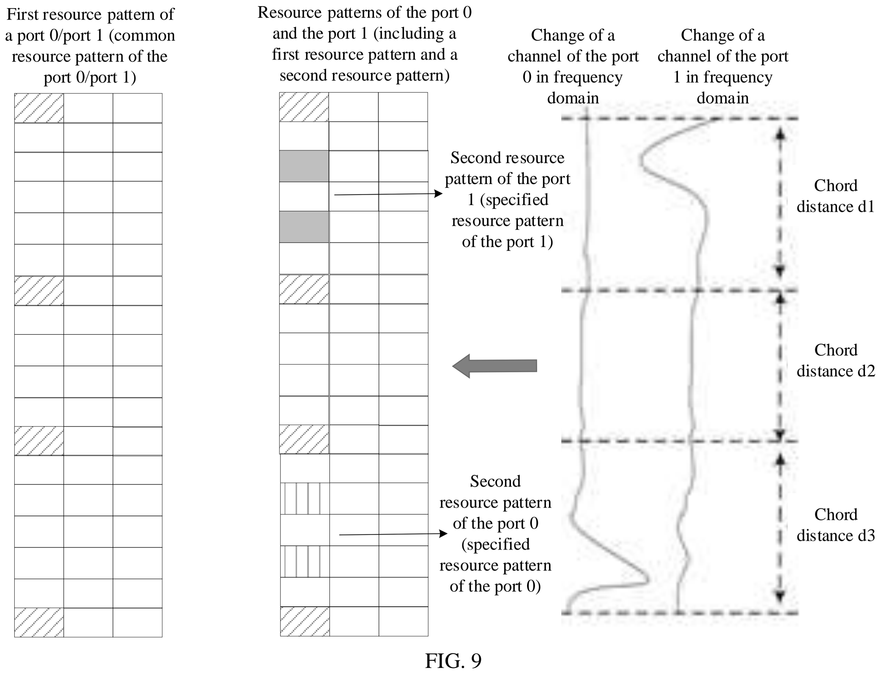

Based on the description of Implementation 2 above, the following describes a relationship between a manifold metric result of the frequency domain channel vector of the reference signal port and a resource pattern by using a diagram. For example, FIG. 9 is a diagram of manifold metric results of frequency domain channel vectors of reference signal ports and corresponding resource patterns according to this application. The right of FIG. 9 shows manifold metric results (using a chord distance as an example) of respective frequency domain channel vectors of two reference signal ports (port_0 and port_1). It is assumed that the first resource pattern is a common resource pattern (that is, a common resource pattern that can be used by both port_0 and port_1, for example, a grid with diagonal lines in FIG. 9), and the second resource pattern is a specified resource pattern (for example, a specified resource pattern 0 of port_0 (for example, a grid with vertical lines in FIG. 9) is used as a second resource pattern, and a specified resource pattern 1 of port_1 (for example, a gray grid in FIG. 9) is used as a second resource pattern). The network device may determine the first resource pattern and the second resource pattern based on the first manifold metric result, the second manifold metric result, and the mapping relationship between a manifold metric result and a resource pattern, as shown on the left of FIG. 9. It can be learned that the first resource pattern and the second resource pattern have different densities and/or different locations.

S102: The terminal device obtains the reference signal resource configuration information.

The reference signal resource configuration information indicates the first resource pattern of the reference signal port. The first resource pattern is associated with the first channel characteristic in the plurality of channel characteristics. The plurality of channel characteristics are determined based on the variation of the channel of the reference signal port in frequency domain. For descriptions of the reference signal resource configuration information, the resource pattern, the channel characteristic, the variation of the channel of the reference signal port in frequency domain, and the like, refer to the corresponding descriptions in S101. Details are not described herein again.

Specifically, the terminal device obtains the reference signal resource configuration information through protocol predefinition or by using a broadcast channel and/or a control channel. S102 includes the following several possible implementations:

Implementation 1: The terminal device obtains the reference signal resource configuration information through protocol predefinition.

For example, a protocol predefines the reference signal resource configuration information, and the predefined reference signal resource configuration information may indicate common information (for example, the first resource pattern (Pattern#1) indicating the reference signal port, where the first resource pattern is a common resource pattern). In this case, the terminal device may directly determine Pattern#1 according to the protocol.

Implementation 2: The terminal device receives the reference signal resource configuration information from the network device by using a broadcast channel or a control channel.

For example, the network device determines the reference signal configuration information based on the variation of the channel of the reference signal port in frequency domain, and broadcasts the reference signal resource configuration information by using a broadcast channel. Correspondingly, the terminal device may receive the reference signal resource configuration information by using the broadcast channel. The reference signal resource configuration information may indicate common information (for example, the first resource pattern (Pattern#1) indicating the reference signal port). For another example, the network device determines the reference signal configuration information based on the variation of the channel of the reference signal port in frequency domain, and sends the reference signal resource configuration information to the terminal device by using a control channel. Correspondingly, the terminal device may receive the reference signal resource configuration information by using the control channel. The reference signal resource configuration information may indicate common information (for example, the first resource pattern (Pattern#1) indicating the reference signal port), and may further indicate specified information of the reference signal port (for example, the second resource pattern (Pattern#2) indicating the reference signal port).

For example, based on the descriptions in Implementation 1 and Implementation 2, Pattern#1 may be obtained through the protocol predefinition or by using a broadcast channel or a control channel, and Pattern#2 may be obtained by using a downlink control channel.

S103: The terminal device determines a configuration of the reference signal port based on the reference signal resource configuration information.

For example, it is assumed that the reference signal resource configuration information indicates resource patterns of a plurality of reference signal ports. In this case, the terminal device may determine a configured resource pattern of each reference signal port (for example, determine configuration information of a reference signal port 1: a first resource pattern and a second resource pattern, and configuration information of a reference signal port 2: a first resource pattern).

Optionally, the terminal device may obtain the resource patterns of the reference signal ports at a same moment or different moments according to an indication of the reference signal resource configuration information, to determine the configuration of the reference signal port. For example, the terminal device receives the configuration information of the first resource pattern and the second resource pattern at different moments (for example, a first moment and a second moment respectively), and the terminal device determines the configuration of the reference signal port based on the first resource pattern received at the first moment and the second resource pattern received at the second moment. For another example, if the terminal device receives the configuration information of the first resource pattern and the second resource pattern at different moments (for example, a first moment and a second moment respectively) or at the same moment, the terminal device may receive a signal of the reference signal port on the first resource pattern at the first moment, and receive a signal of the reference signal port on the second resource pattern at the second moment.

Optionally, after S103, the following steps are further included:

S104: The terminal device determines channel information of the reference signal port based on the configuration of the reference signal port.

The terminal device may determine the channel information of the reference signal port based on the resource pattern configured on the reference signal port. Specifically, S104 includes the following several possible implementations:

Implementation 1: The terminal device receives a reference signal on the configured resource pattern of the reference signal port, and performs channel estimation based on the reference signal.

Implementation 1 includes the following several cases:

Case 1: When the reference signal port is configured with the first resource pattern, and channel estimation is performed based on the reference signal, S104 specifically includes the following procedure:

(1) The terminal device receives a first reference signal of the reference signal port based on the first resource pattern.

(2) The terminal device performs channel estimation based on the first reference signal, and determines the channel information of the reference signal port.

For example, when the reference signal port is configured with the first resource pattern, the terminal device may receive the first reference signal (for example, the first reference signal has a small variation in frequency domain) based on the first resource pattern, and perform channel estimation based on the first reference signal, to determine the channel information of the reference signal port in entire frequency domain (for example, the channel of the reference signal port has a slow-change characteristic in frequency domain). For a method for performing channel estimation by the terminal device based on the first reference signal, refer to descriptions in an existing protocol standard. This is not limited in this application.

Case 2: When the reference signal port is configured with the first resource pattern and the second resource pattern, and channel estimation is performed based on the reference signal, S104 specifically includes the following procedure:

(1) The terminal device receives a first reference signal of the reference signal port based on the first resource pattern.
(2) The terminal device receives a second reference signal of the reference signal port based on the second resource pattern.
(3) The terminal device performs joint channel estimation based on the first reference signal and the second reference signal, and determines the channel information of the reference signal port.

For example, when the reference signal port is configured with the first resource pattern and the second resource pattern, the terminal device may receive the first reference signal (for example, the first reference signal has a small variation in frequency domain) and the second reference signal (for example, the second reference signal has a large variation in frequency domain) based on the first resource pattern, and perform joint channel estimation based on the first reference signal and the second reference signal, to determine the channel information of the reference signal port in entire frequency domain (for example, the channel of the reference signal port has two characteristics: a slow change and a fast change in frequency domain). For a method for performing joint channel estimation by the terminal device based on the first reference signal and the second reference signal, refer to descriptions in an existing protocol standard. This is not limited in this application.

Implementation 2: The terminal device receives a reference signal of the reference signal port on the configured resource pattern of the reference signal port, and determines the channel information based on the reference signal and a channel component corresponding to the resource pattern.

Implementation 2 includes the following several cases:

Case 1: When the reference signal port is configured with the first resource pattern, and the channel information is determined based on the reference signal and the channel component corresponding to the resource pattern, S104 specifically includes the following procedure:

(1) The terminal device receives a first reference signal of the reference signal port based on the first resource pattern.
(2a) The terminal device determines, based on a preset mapping relationship between a channel component and a resource pattern, a third channel component corresponding to the first resource pattern.

Alternatively, the following step is performed. (2b) The terminal device determines, based on a predefined algorithm for determining a resource pattern based on a channel component, a third channel component corresponding to the first resource pattern.

Alternatively, the following step is performed. (2c) The terminal device determines, based on a preset mapping relationship between a metric parameter of a channel component and a resource pattern, a third channel component corresponding to the first resource pattern.

(3) The terminal device determines the channel information of the reference signal port based on the first reference signal and the third channel component.

For example, when the reference signal port is configured with the first resource pattern, the terminal device may receive the first reference signal (for example, the first reference signal has a small variation in frequency domain) based on the first resource pattern, and perform channel estimation based on the first reference signal. The terminal device may determine, based on the preset mapping relationship between a channel component and a resource pattern, the third channel component corresponding to the first resource pattern (for example, the third channel component has a slow-change characteristic in frequency domain), to determine the channel information of the reference signal port (for example, the channel of the reference signal port has a slow-change characteristic in frequency domain) based on both a channel estimation result of the first reference signal and the third channel component. Optionally, the terminal device may determine, based on the preset mapping relationship between a metric parameter of a channel component and a resource pattern, a third channel component threshold corresponding to the first resource pattern. It is assumed that the third channel component threshold is used as the third channel component. In this case, the terminal device may determine the third channel component corresponding to the first resource pattern. Optionally, the foregoing steps (2a), (2b), and (2c) are different implementations of a same step, and only one of the steps needs to be performed.

Case 2: When the reference signal port is configured with the first resource pattern and the second resource pattern, and the channel information is determined based on the reference signal and the channel component corresponding to the resource pattern, S104 specifically includes the following procedure:

(1) The terminal device receives a first reference signal of the reference signal port based on the first resource pattern.

(2) The terminal device receives a second reference signal of the reference signal port based on the second resource pattern.

(3a) The terminal device determines, based on a preset mapping relationship between a channel component and a resource pattern, a third channel component corresponding to the first resource pattern and a fourth channel component corresponding to the second resource pattern.

Alternatively, the following step is performed. (3b) The terminal device determines, based on a predefined algorithm for determining a resource pattern based on a channel component, a third channel component corresponding to the first resource pattern and a fourth channel component corresponding to the second resource pattern.

Alternatively, the following step is performed. (3c) The terminal device determines, based on a preset mapping relationship between a metric parameter of a channel component and a resource pattern, a third channel component corresponding to the first resource pattern and a fourth channel component corresponding to the second resource pattern.

(4) The terminal device determines the channel information of the reference signal port based on the first reference signal, the second reference signal, the third channel component, and the fourth channel component.

For an example of Case 2, refer to the description of the example of Case 1 in Implementation 2 above. Details are not described herein again.

Implementation 3: The terminal device receives a reference signal of the reference signal port on the configured resource pattern of the reference signal port, and determines the channel information based on the reference signal and a manifold metric result corresponding to the resource pattern.

Implementation 3 includes the following several cases:

Case 1: When the reference signal port is configured with the first resource pattern, and the channel information is determined based on the reference signal and the manifold metric result corresponding to the resource pattern, S104 specifically includes the following procedure:

(1) The terminal device receives a first reference signal of the reference signal port based on the first resource pattern.

(2) The terminal device determines, based on a preset mapping relationship between a metric parameter and a resource pattern, a third manifold metric result corresponding to the first resource pattern.

(3) The terminal device determines the channel information of the reference signal port based on the first reference signal and the third manifold metric result.

For example, when the reference signal port is configured with the first resource pattern, the terminal device may receive the first reference signal (for example, the first reference signal has a small variation in frequency domain) based on the first resource pattern, and perform channel estimation based on the first reference signal. The terminal device may determine, based on the preset mapping relationship between a metric parameter and a resource pattern, a third metric threshold corresponding to the first resource pattern. It is assumed that the third metric threshold is used as the third manifold metric result. In this case, the terminal device may determine the third manifold metric result corresponding to the first resource pattern.

Case 2: When the reference signal port is configured with the first resource pattern and the second resource pattern, and the channel information is determined based on the reference signal and the manifold metric result corresponding to the resource pattern, S104 specifically includes the following procedure:

(1) The terminal device receives a first reference signal of the reference signal port based on the first resource pattern.

(2) The terminal device receives a second reference signal of the reference signal port based on the second resource pattern.

(3) The terminal device determines, based on a preset mapping relationship between a metric parameter and a resource pattern, a third manifold metric result corresponding to the first resource pattern and a fourth manifold metric result corresponding to the second resource pattern.

(4) The terminal device determines the channel information of the reference signal port based on the first reference signal, the second reference signal, the third manifold metric result, and the fourth manifold metric result.

For an example of Case 2, refer to the description of the example of Case 1 in Implementation 3 above. Details are not described herein again.

The reference signal configuration method in this embodiment can adapt to a change of a frequency domain channel and further reduce air interface resource overheads, in comparison with a manner in which frequency domain resources of reference signal ports are uniformly distributed, thereby facilitating improvement of system spectrum efficiency. In addition, a resource pattern indicated by configured reference signal resource configuration information is associated with a channel characteristic. Configuration can be flexibly implemented based on the channel characteristic, so that air interface overheads can be further reduced.

To implement the functions in the method provided in this application, the apparatus or the device provided in this application may include a hardware structure and/or a software module, to implement the foregoing functions by using the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions. Division into modules in this application is an example, is merely logical function division, and may be other division during actual implementation. In addition, functional modules in embodiments of this application may be integrated into one processor, or may exist alone physically, or two or more modules may be integrated into one module. The integrated module may be implemented in a form of hardware, or may be implemented in a form of a software functional module.

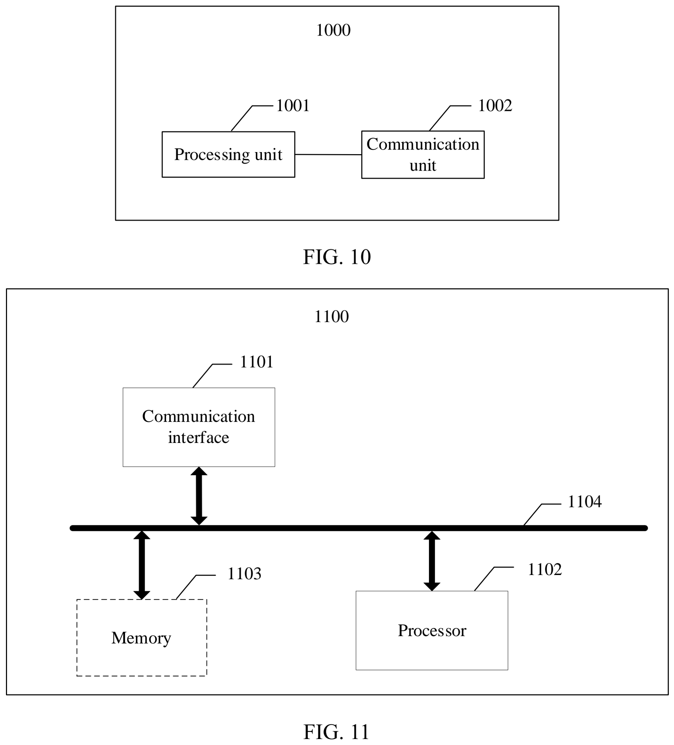

FIG. 10 is a diagram of a communication apparatus according to this application. The apparatus may include a one-to-one corresponding module for performing the method/operation/step/action described in the embodiments shown in FIG. 5 to FIG. 9. The module may be a hardware circuit, or may be software, or may be implemented by a hardware circuit in combination with software.

The apparatus 1000 includes a processing unit 1001 and a communication unit 1002, and is configured to implement the method performed by each device in the foregoing embodiments.

In a possible implementation, the apparatus is a network device, or is located in a network device. Specifically, the processing unit 1001 is configured to determine a plurality of channel characteristics of a channel of a reference signal port and reference signal resource configuration information based on a variation of the channel of the reference signal port in frequency domain. The reference signal resource configuration information indicates a first resource pattern of the reference signal port, and the first resource pattern is associated with a first channel characteristic in the plurality of channel characteristics. The communication unit 1002 is configured to send the reference signal resource configuration information to a terminal device.

Optionally, the reference signal resource configuration information further indicates a second resource pattern of the reference signal port, and the second resource pattern is associated with a second channel characteristic in the plurality of channel characteristics.

Optionally, the first resource pattern and the second resource pattern have different densities and/or different locations in frequency domain.

Optionally, a quasi co-location relationship exists between a first resource corresponding to the first resource pattern and a second resource corresponding to the second resource pattern.

Optionally, the first resource pattern is a common resource pattern of a plurality of reference signal ports, and the second resource pattern is a specified resource pattern of the reference signal port; or the first resource pattern is a specified resource pattern of the reference signal port, and the second resource pattern is a common resource pattern of a plurality of reference signal ports.

Optionally, a first variation corresponding to the first resource pattern in the variation of the channel of the reference signal port in frequency domain is less than or equal to a first threshold, a second variation corresponding to the second resource pattern in the variation of the channel of the reference signal port in frequency domain is greater than or equal to a second threshold, and the first threshold is less than the second threshold; or a first variation corresponding to the first resource pattern in the variation of the channel of the reference signal port in frequency domain is greater than or equal to a first threshold, a second variation corresponding to the second resource pattern in the variation of the channel of the reference signal port in frequency domain is less than or equal to a second threshold, and the first threshold is greater than the second threshold.

Optionally, that the processing unit 1001 is configured to determine the plurality of channel characteristics of the channel of the reference signal port and the reference signal resource configuration information based on the variation of the channel of the reference signal port in frequency domain includes:

performing component decomposition on the variation of the channel of the reference signal port in frequency domain, to obtain a first channel component and a second channel component, where the first channel component corresponds to the first channel characteristic, and the second channel component corresponds to the second channel characteristic; and

determining, based on a preset mapping relationship between a channel characteristic and a resource pattern, the first resource pattern corresponding to the first channel characteristic; or determining, based on a predefined algorithm for determining a resource pattern based on a channel characteristic, the first resource pattern corresponding to the first channel characteristic.

Optionally, that the processing unit 1001 is configured to determine the plurality of channel characteristics of the channel of the reference signal port and the reference signal resource configuration information based on the variation of the channel of the reference signal port in frequency domain includes:

performing component decomposition on the variation of the channel of the reference signal port in frequency domain, to obtain a first channel component and a second channel component, where the first channel component corresponds to the first channel characteristic, and the second channel component corresponds to the second channel characteristic; and

determining, based on a preset mapping relationship between a channel characteristic and a resource pattern, the first resource pattern corresponding to the first channel characteristic and the second resource pattern corresponding to the second channel characteristic; or determining, based on a predefined algorithm for determining a resource pattern based on a channel characteristic, the first resource pattern corresponding to the first channel characteristic and the second resource pattern corresponding to the second channel characteristic.

Optionally, that the processing unit 1001 is configured to determine the plurality of channel characteristics of the channel of the reference signal port and the reference signal resource configuration information based on the variation of the channel of the reference signal port in frequency domain includes:

performing component decomposition on the variation of the channel of the reference signal port in frequency domain, to obtain a first channel component and a second channel component, where the first channel component is the first channel characteristic, and the second channel component is the second channel characteristic; and determining, based on a preset mapping relationship between a channel component and a resource pattern, the first resource pattern corresponding to the first channel component; or determining, based on a predefined algorithm for determining a resource pattern based on a channel component, the first resource pattern corresponding to the first channel component; or determining, based on a preset mapping relationship between a metric parameter of a channel component and a resource pattern, the first resource pattern corresponding to the first channel component, where the metric parameter includes a metric threshold or a metric threshold interval.

Optionally, that the processing unit 1001 is configured to determine the plurality of channel characteristics of the channel of the reference signal port and the reference signal resource configuration information based on the variation of the channel of the reference signal port in frequency domain includes:

performing component decomposition on the variation of the channel of the reference signal port in frequency domain, to obtain a first channel component and a second channel component, where the first channel component is the first channel characteristic, and the second channel component is the second channel characteristic; and determining, based on a preset mapping relationship between a channel component and a resource pattern, the first resource pattern corresponding to the first channel component and the second resource pattern corresponding to the second channel component; or determining, based on a predefined algorithm for determining a resource pattern based on a channel component, the first resource pattern corresponding to the first channel component and the second resource pattern corresponding to the second channel component; or determining, based on a preset mapping relationship between a metric parameter of a channel component and a resource pattern, the first resource pattern corresponding to the first channel component and the second resource pattern corresponding to the second channel component, where the metric parameter includes a metric threshold or a metric threshold interval.

Optionally, the first channel component is associated with a first weight coefficient, and the second channel component is associated with a second weight coefficient. The processing unit 1001 is further configured to:

enable the second resource pattern when the second weight coefficient is greater than or equal to a weight coefficient threshold; or
disable the second resource pattern when the second weight coefficient is less than a weight coefficient threshold.

Optionally, the processing unit 1001 is further configured to:
preset a common resource pattern set of a group of reference signal ports, where a mapping relationship exists between the resource pattern set and a group of determined channel components.
The first channel component has a first index value in the resource pattern set, and the second channel component has a second index value in the resource pattern set. The first index value indicates the first resource pattern, and the second index value indicates the second resource pattern.
Optionally, that the processing unit 1001 is configured to determine the plurality of channel characteristics of the channel of the reference signal port and the reference signal resource configuration information based on the variation of the channel of the reference signal port in frequency domain includes:

performing manifold metric analysis on a frequency domain channel vector of the reference signal port, to obtain a first manifold metric result and a second manifold metric result that correspond to the frequency domain channel vector, where the first manifold metric result corresponds to the first channel characteristic, and the second manifold metric result corresponds to the second channel characteristic; and

determining, based on a preset mapping relationship between a channel characteristic and a resource pattern, the first resource pattern corresponding to the first channel characteristic; or determining, based on a predefined algorithm for determining a resource pattern based on a channel characteristic, the first resource pattern corresponding to the first channel characteristic.

Optionally, that the processing unit 1001 is configured to determine the plurality of channel characteristics of the channel of the reference signal port and the reference signal resource configuration information based on the variation of the channel of the reference signal port in frequency domain includes:

performing manifold metric analysis on a frequency domain channel vector of the reference signal port, to obtain a first manifold metric result and a second manifold metric result that correspond to the frequency domain channel vector, where the first manifold metric result corresponds to the first channel characteristic, and the second manifold metric result corresponds to the second channel characteristic; and

determining, based on a preset mapping relationship between a channel characteristic and a resource pattern, the first resource pattern corresponding to the first channel characteristic and the second resource pattern corresponding to the second channel characteristic; or determining, based on a predefined algorithm for determining a resource pattern based on a channel characteristic, the first resource pattern corresponding to the first channel characteristic and the second resource pattern corresponding to the second channel characteristic.

Optionally, that the processing unit 1001 is configured to determine the plurality of channel characteristics of the channel of the reference signal port and the reference signal resource configuration information based on the variation of the channel of the reference signal port in frequency domain includes:

performing manifold metric analysis on a frequency domain channel vector of the reference signal port, to obtain a first manifold metric result and a second manifold metric result that correspond to the frequency domain channel vector, where the first manifold metric result is the first channel characteristic, and the second manifold metric result is the second channel characteristic; and

determining, based on a preset mapping relationship between a metric parameter and a resource pattern, the first resource pattern corresponding to the first manifold metric result, where the metric parameter includes a metric threshold or a metric threshold interval.

Optionally, that the processing unit 1001 is configured to determine the plurality of channel characteristics of the channel of the reference signal port and the reference signal resource configuration information based on the variation of the channel of the reference signal port in frequency domain includes:

performing manifold metric analysis on a frequency domain channel vector of the reference signal port, to obtain a first manifold metric result and a second manifold metric result that correspond to the frequency domain channel vector, where the first manifold metric result is the first channel characteristic, and the second manifold metric result is the second channel characteristic; and

determining, based on a preset mapping relationship between a metric parameter and a resource pattern, the first resource pattern corresponding to the first manifold metric result and the second resource pattern corresponding to the second manifold metric result, where the metric parameter includes a metric threshold or a metric threshold interval.

For specific execution procedures of the processing unit 1001 and the communication unit 1002 in this implementation, refer to the corresponding descriptions in the foregoing method embodiments. Details are not described again. In the reference signal configuration method implemented by the apparatus, during determining of the reference signal resource configuration information, the method can adapt to a change of a frequency domain channel and further reduce air interface resource overheads, in comparison with a manner in which frequency domain resources of reference signal ports are uniformly distributed, thereby facilitating improvement of system spectrum efficiency. In addition, a resource pattern indicated by configured reference signal resource configuration information is associated with a channel characteristic. Configuration can be flexibly implemented based on the channel characteristic, so that air interface overheads can be further reduced.

In another possible implementation, the apparatus is a terminal device, or is located in a terminal device. Specifically, the communication unit 1002 is configured to obtain reference signal resource configuration information, where the reference signal resource configuration information indicates a first resource pattern of the reference signal port, the first resource pattern is associated with a first channel characteristic in a plurality of channel characteristics, and the plurality of channel characteristics are determined based on a variation of a channel of the reference signal port in frequency domain. The processing unit 1001 is configured to determine a configuration of the reference signal port based on the reference signal resource configuration information.

Optionally, the processing unit 1001 is configured to determine channel information of the reference signal port based on the configuration of the reference signal port.

Optionally, that the processing unit 1001 is configured to determine the channel information of the reference signal port based on the configuration of the reference signal port includes:

obtaining complete channel information of the reference signal port based on a first resource pattern; or obtaining complete channel information of the reference signal port based on a first resource pattern and a second resource pattern.

Optionally, the reference signal resource configuration information further indicates a second resource pattern of the reference signal port, and the second resource pattern is associated with a second channel characteristic in the plurality of channel characteristics.

Optionally, the first resource pattern and the second resource pattern have different densities and/or different locations in frequency domain.

Optionally, a quasi co-location relationship exists between a first resource corresponding to the first resource pattern and a second resource corresponding to the second resource pattern.

Optionally, the first resource pattern is a common resource pattern of a plurality of reference signal ports, and the second resource pattern is a specified resource pattern of the reference signal port; or the first resource pattern is a specified resource pattern of the reference signal port, and the second resource pattern is a common resource pattern of a plurality of reference signal ports.

Optionally, a first variation corresponding to the first resource pattern in the variation of the channel of the reference signal port in frequency domain is less than or equal to a first threshold, a second variation corresponding to the second resource pattern in the variation of the channel of the reference signal port in frequency domain is greater than or equal to a second threshold, and the first threshold is less than the second threshold; or a first variation corresponding to the first resource pattern in the variation of the channel of the reference signal port in frequency domain is greater than or equal to a first threshold, a second variation corresponding to the second resource pattern in the variation of the channel of the reference signal port in frequency domain is less than or equal to a second threshold, and the first threshold is greater than the second threshold.

Optionally, that the communication unit 1002 is configured to obtain the reference signal resource configuration information includes:

obtaining the reference signal resource configuration information through protocol predefinition; or receiving the reference signal resource configuration information from a network device by using a broadcast channel or a control channel.

Optionally, that the processing unit 1001 is configured to determine the channel information of the reference signal port based on the configuration of the reference signal port includes:

receiving a first reference signal of the reference signal port based on the first resource pattern; and
performing channel estimation based on the first reference signal, and determining the channel information of the reference signal port.

Optionally, that the processing unit 1001 is configured to determine the channel information of the reference signal port based on the configuration of the reference signal port includes:

receiving a first reference signal of the reference signal port based on the first resource pattern;
receiving a second reference signal of the reference signal port based on the second resource pattern; and
performing joint channel estimation based on the first reference signal and the second reference signal, and determining the channel information of the reference signal port.

Optionally, that the processing unit 1001 is configured to determine the channel information of the reference signal port based on the configuration of the reference signal port includes:

receiving a first reference signal of the reference signal port based on the first resource pattern; and
determining, based on a preset mapping relationship between a channel component and a resource pattern, a third channel component corresponding to the first resource pattern; or determining, based on a predefined algorithm for determining a resource pattern based on a channel component, a third channel component corresponding to the first resource pattern; or determining, based on a preset mapping relationship between a metric parameter of a channel component and a resource pattern, a third channel component corresponding to the first resource pattern, where the metric parameter includes a metric threshold or a metric threshold space; and
determining the channel information of the reference signal port based on the first reference signal and the third channel component.

Optionally, that the processing unit 1001 is configured to determine the channel information of the reference signal port based on the configuration of the reference signal port includes:

receiving a first reference signal of the reference signal port based on the first resource pattern;
receiving a second reference signal of the reference signal port based on the second resource pattern; and
determining, based on a preset mapping relationship between a channel component and a resource pattern, a third channel component corresponding to the first resource pattern and a fourth channel component corresponding to the second resource pattern; or determining, based on a predefined algorithm for determining a resource pattern based on a channel component, a third channel component corresponding to the first resource pattern and a fourth channel component corresponding to the second resource pattern; or determining, based on a preset mapping relationship between a metric parameter of a channel component and a resource pattern, a third channel component corresponding to the first resource pattern and a fourth channel component corresponding to the second resource pattern, where the metric parameter includes a metric threshold or a metric threshold space; and
determining the channel information of the reference signal port based on the first reference signal, the second reference signal, the third channel component, and the fourth channel component.

Optionally, that the processing unit 1001 is configured to determine the channel information of the reference signal port based on the configuration of the reference signal port includes:

receiving a first reference signal of the reference signal port based on the first resource pattern;
determining, based on a preset mapping relationship between a metric parameter and a resource pattern, a third manifold metric result corresponding to the first resource pattern, where the metric parameter includes a metric threshold or a metric threshold space; and
determining the channel information of the reference signal port based on the first reference signal and the third manifold metric result.

Optionally, that the processing unit 1001 is configured to determine the channel information of the reference signal port based on the configuration of the reference signal port includes:

receiving a first reference signal of the reference signal port based on the first resource pattern;
receiving a second reference signal of the reference signal port based on the second resource pattern;
determining, based on a preset mapping relationship between a metric parameter and a resource pattern, a third manifold metric result corresponding to the first resource pattern and a fourth manifold metric result corresponding to the second resource pattern, where the metric parameter includes a metric threshold or a metric threshold space; and
determining the channel information of the reference signal port based on the first reference signal, the second reference signal, the third manifold metric result, and the fourth manifold metric result.

Optionally, that the processing unit 1001 is configured to determine the configuration of the reference signal port based on the reference signal resource configuration information includes:

determining the configuration of the reference signal port based on the first resource pattern and the second resource pattern that are obtained at a first moment; or
determining the configuration of the reference signal port based on the first resource pattern obtained at a first moment and the second resource pattern obtained at a second moment.

Optionally, that the processing unit 1001 is configured to determine the configuration of the reference signal port based on the reference signal resource configuration information includes:

determining the second resource pattern at a second moment based on the first resource pattern obtained at a first moment; and
determining the configuration of the reference signal port based on the first resource pattern and the second resource pattern.

For specific execution procedures of the processing unit 1001 and the communication unit 1002 in this implementation, refer to the corresponding descriptions in the foregoing method embodiments. Details are not described again. The reference signal configuration method implemented by the apparatus can adapt to a change of a frequency domain channel and further reduce air interface resource overheads, in comparison with a manner in which frequency domain resources of reference signal ports are uniformly distributed, thereby facilitating improvement of system spectrum efficiency. In addition, a resource pattern indicated by reference signal resource configuration information is associated with a channel characteristic. A terminal device can flexibly configure a reference signal port based on the channel characteristic, so that air interface overheads can be further reduced.

FIG. 11 is a diagram of another communication apparatus according to this application. The communication apparatus is configured to implement the reference signal configuration method in the foregoing method embodiments. The apparatus 1100 may be a chip system, or may be the device described in the foregoing method embodiments.

The apparatus 1100 includes a communication interface 1101 and a processor 1102. The communication interface 1101 may be, for example, a transceiver, an interface, a bus, a circuit, or an apparatus that can implement transmitting and receiving functions. The communication interface 1101 is configured to communicate with another device through a transmission medium, so that the apparatus 1100 can communicate with the another device. The processor 1102 is configured to perform a processing-related operation.

In a possible implementation, the apparatus is a network device, or is located in a network device. Specifically, the processor 1102 is configured to determine a plurality of channel characteristics of a channel of a reference signal port and reference signal resource configuration information based on a variation of the channel of the reference signal port in frequency domain. The reference signal resource configuration information indicates a first resource pattern of the reference signal port, and the first resource pattern is associated with a first channel characteristic in the plurality of channel characteristics. The communication interface 1101 is configured to send the reference signal resource configuration information to a terminal device.

For specific execution procedures of the communication interface 1101 and the processor 1102 in this implementation, refer to the foregoing method embodiments and the corresponding descriptions in the implementation of the processing unit 1001 and the communication unit 1002 in the embodiment in FIG. 10. Details are not described herein again. In the reference signal configuration method implemented by the apparatus, during determining of the reference signal resource configuration information, the method can adapt to a change of a frequency domain channel and further reduce air interface resource overheads, in comparison with a manner in which frequency domain resources of reference signal ports are uniformly distributed, thereby facilitating improvement of system spectrum efficiency. In addition, a resource pattern indicated by configured reference signal resource configuration information is associated with a channel characteristic. Configuration can be flexibly implemented based on the channel characteristic, so that air interface overheads can be further reduced.

In another possible implementation, the apparatus is a terminal device, or is located in a terminal device. Specifically, the communication interface 1101 is configured to obtain reference signal resource configuration information, where the reference signal resource configuration information indicates a first resource pattern of the reference signal port, the first resource pattern is associated with a first channel characteristic in a plurality of channel characteristics, and the plurality of channel characteristics are determined based on a variation of a channel of the reference signal port in frequency domain. The processor 1102 is configured to determine a configuration of the reference signal port based on the reference signal resource configuration information.

For specific execution procedures of the communication interface 1101 and the processor 1102 in this implementation, refer to the foregoing method embodiments and the corresponding descriptions in the implementation of the processing unit 1001 and the communication unit 1002 in the embodiment in FIG. 10. Details are not described herein again. The reference signal configuration method implemented by the apparatus can adapt to a change of a frequency domain channel and further reduce air interface resource overheads, in comparison with a manner in which frequency domain resources of reference signal ports are uniformly distributed, thereby facilitating improvement of system spectrum efficiency. In addition, a resource pattern indicated by reference signal resource configuration information is associated with a channel characteristic. A terminal device can flexibly configure a reference signal port based on the channel characteristic, so that air interface overheads can be further reduced.

Optionally, the apparatus 1100 may further include at least one memory 1103, configured to store program instructions and/or data. In an implementation, the memory is coupled to the processor. The coupling in this application may be an indirect coupling or a communication connection between apparatuses, units, or modules in an electrical form, a mechanical form, or another form, and is used for information exchange between the apparatuses, the units, or the modules. The processor may perform an operation in collaboration with the memory. The processor may execute the program instructions stored in the memory. The at least one memory and the processor are integrated together.

In this application, a specific connection medium between the communication interface, the processor, and the memory is not limited. For example, the memory, the processor, and the communication interface are connected by using a bus. The bus 1104 is represented by using a thick line in FIG. 11. A connection manner between other components is merely an example for description, and is not limited. The bus may be classified into an address bus, a data bus, a control bus, and the like. For ease of representation, only one bold line is used to represent the bus in FIG. 11, but this does not mean that there is only one bus or only one type of bus.

In this application, the processor may be a general-purpose processor, a digital signal processor, an application-specific integrated circuit, a field programmable gate array or another programmable logic device, a discrete gate or a transistor logic device, or a discrete hardware component, and may implement or perform methods, steps, and logical block diagrams that are disclosed in this application. The general-purpose processor may be a microprocessor or any conventional processor or the like. The steps of the methods disclosed with reference to this application may be directly implemented by a hardware processor, or may be implemented by a combination of hardware and a software module in a processor.

In this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. Alternatively, the memory in this application may be a circuit or any other apparatus that can implement a storage function, and is configured to store program instructions and/or data.

This application provides another communication apparatus. The communication apparatus includes a processor, configured to execute instructions. Optionally, the communication apparatus further includes a memory. The memory is configured to store instructions. When the instructions are executed by the processor, the reference signal configuration method in the embodiments shown in FIG. 6 to FIG. 9 is implemented.

This application provides a communication system. The communication system includes one or more of the devices in the embodiments shown in FIG. 6 to FIG. 9.

This application provides a computer-readable storage medium. The computer-readable storage medium stores a program or instructions. When the program or the instructions are run on a computer, the computer is enabled to perform the reference signal configuration method in the embodiments shown in FIG. 6 to FIG. 9.

This application provides a computer program product. The computer program product includes instructions. When the instructions are run on a computer, the computer is enabled to perform the reference signal configuration method in the embodiments shown in FIG. 6 to FIG. 9.

This application provides a chip or a chip system. The chip or the chip system includes at least one processor and an interface. The interface and the at least one processor are interconnected through a line. The at least one processor is configured to run a computer program or instructions, to perform the reference signal configuration method in the embodiments shown in FIG. 6 to FIG. 9.

The interface in the chip may be an input/output interface, a pin, a circuit, or the like.

The chip system may be a system on a chip (system on a chip, SOC), or may be a baseband chip, or the like. The baseband chip may include a processor, a channel encoder, a digital signal processor, a modem, an interface module, and the like.

In an implementation, the chip or the chip system described above in this application further includes at least one memory, and the at least one memory stores instructions. The memory may be a storage unit inside the chip, for example, a register or a cache, or may be a storage unit (for example, a read-only memory or a random access memory) of the chip.

All or some of the technical solutions provided in this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by the computer, or a data storage device like a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, on the premise that there is no logical conflict, the embodiments may be mutually referenced. For example, methods and/or terms may be mutually referenced between method embodiments. For example, functions and/or terms may be mutually referenced between apparatus embodiments. For example, functions and/or terms may be mutually referenced between apparatus embodiments and method embodiments.

It is clear that a person skilled in the art can make various modifications and variations to this application without departing from the scope of this application. This application is intended to cover these modifications and variations of this application provided that they fall within the scope of protection defined by the following claims of this application and their equivalent technologies.

**Claims**

1. A reference signal configuration method, comprising:

   determining a plurality of channel characteristics of a channel of a reference signal port and reference signal resource configuration information based on a variation of the channel of the reference signal port in frequency domain, wherein the reference signal resource configuration information indicates a first resource pattern of the reference signal port, and the first resource pattern is associated with a first channel characteristic in the plurality of channel characteristics; and
   sending the reference signal resource configuration information to a terminal device.

2. The method according to claim 1, wherein the reference signal resource configuration information further indicates a second resource pattern of the reference signal port, and the second resource pattern is associated with a second channel characteristic in the plurality of channel characteristics.

3. The method according to claim 2, wherein the first resource pattern and the second resource pattern have different densities and/or different locations in frequency domain.

4. The method according to claim 2, wherein a quasi co-location relationship exists between a first resource corresponding to the first resource pattern and a second resource corresponding to the second resource pattern.

5. The method according to claim 2, wherein the first resource pattern is a common resource pattern, and the second resource pattern is a specified resource pattern of the reference signal port; or

   the first resource pattern is a specified resource pattern of the reference signal port, and the second resource pattern is a common resource pattern, wherein
   the common resource pattern is a common resource pattern of a plurality of reference signal ports that comprise the reference signal port.

6. The method according to claim 2, wherein a first variation corresponding to the first resource pattern in the variation is less than or equal to a first threshold, a second variation corresponding to the second resource pattern in the variation is greater than or equal to a second threshold, and the first threshold is less than the second threshold; or
   a first variation corresponding to the first resource pattern in the variation is greater than or equal to a first threshold, a second variation corresponding to the second resource pattern in the variation is less than or equal to a second threshold, and the first threshold is greater than the second threshold.

7. The method according to any one of claims 1 to 6, wherein determining the plurality of channel characteristics of the channel of the reference signal port and the reference signal resource configuration information based on the variation of the channel of the reference signal port in frequency domain comprises:

   performing component decomposition on the variation of the channel of the reference signal port in frequency domain, to obtain a first channel component and a second channel component, wherein the first channel component corresponds to the first channel characteristic, and the second channel component corresponds to the second channel characteristic; and
   determining, based on a preset mapping relationship between a channel characteristic and a resource pattern, the first resource pattern corresponding to the first channel characteristic; or
   determining, based on a predefined algorithm for determining a resource pattern based on a channel characteristic, the first resource pattern corresponding to the first channel characteristic.

8. The method according to any one of claims 2 to 6, wherein determining the plurality of channel characteristics of the channel of the reference signal port and the reference signal resource configuration information based on the variation of the channel of the reference signal port in frequency domain comprises:

   performing component decomposition on the variation of the channel of the reference signal port in frequency domain, to obtain a first channel component and a second channel component, wherein the first channel component corresponds to the first channel characteristic, and the second channel component corresponds to the second channel characteristic; and

determining, based on a preset mapping relationship between a channel characteristic and a resource pattern, the first resource pattern corresponding to the first channel characteristic and the second resource pattern corresponding to the second channel characteristic; or

determining, based on a predefined algorithm for determining a resource pattern based on a channel characteristic, the first resource pattern corresponding to the first channel characteristic and the second resource pattern corresponding to the second channel characteristic.

9. The method according to any one of claims 1 to 6, wherein determining the plurality of channel characteristics of the channel of the reference signal port and the reference signal resource configuration information based on the variation of the channel of the reference signal port in frequency domain comprises:

performing component decomposition on the variation of the channel of the reference signal port in frequency domain, to obtain a first channel component and a second channel component, wherein the first channel component is the first channel characteristic, and the second channel component is the second channel characteristic; and

determining, based on a preset mapping relationship between a channel component and a resource pattern, the first resource pattern corresponding to the first channel component; or

determining, based on a predefined algorithm for determining a resource pattern based on a channel component, the first resource pattern corresponding to the first channel component; or

determining, based on a preset mapping relationship between a metric parameter of a channel component and a resource pattern, the first resource pattern corresponding to the first channel component, wherein the metric parameter comprises a metric threshold or a metric threshold interval.

10. The method according to any one of claims 2 to 6, wherein determining the plurality of channel characteristics of the channel of the reference signal port and the reference signal resource configuration information based on the variation of the channel of the reference signal port in frequency domain comprises:

performing component decomposition on the variation of the channel of the reference signal port in frequency domain, to obtain a first channel component and a second channel component, wherein the first channel component is the first channel characteristic, and the second channel component is the second channel characteristic; and

determining, based on a preset mapping relationship between a channel component and a resource pattern, the first resource pattern corresponding to the first channel component and the second resource pattern corresponding to the second channel component; or

determining, based on a predefined algorithm for determining a resource pattern based on a channel component, the first resource pattern corresponding to the first channel component and the second resource pattern corresponding to the second channel component; or

determining, based on a preset mapping relationship between a metric parameter of a channel component and a resource pattern, the first resource pattern corresponding to the first channel component and the second resource pattern corresponding to the second channel component, wherein the metric parameter comprises a metric threshold or a metric threshold interval.

11. The method according to claim 8 or 10, wherein the first channel component is associated with a first weight coefficient, and the second channel component is associated with a second weight coefficient; and the method further comprises:

enabling the second resource pattern when the second weight coefficient is greater than or equal to a weight coefficient threshold; or

disabling the second resource pattern when the second weight coefficient is less than a weight coefficient threshold.

12. The method according to claim 8 or 10, wherein the method further comprises:

presetting a common resource pattern set of a group of reference signal ports, wherein a mapping relationship exists between the resource pattern set and a group of determined channel components;

the first channel component has a first index value in the resource pattern set, and the second channel component has a second index value in the resource pattern set; and

the first index value indicates the first resource pattern, and the second index value indicates the second resource pattern.

13. The method according to any one of claims 1 to 6, wherein determining the plurality of channel characteristics of the channel of the reference signal port and the reference signal resource configuration information based on the variation of the channel of the reference signal port in frequency domain comprises:

performing manifold metric analysis on a frequency domain channel vector of the reference signal port, to obtain a first manifold metric result and a second manifold metric result that correspond to the frequency domain channel vector, wherein the first manifold metric result corresponds to the first channel characteristic, and the second manifold metric result corresponds to the second channel characteristic; and

determining, based on a preset mapping relationship between a channel characteristic and a resource pattern, the first resource pattern corresponding to the first channel characteristic; or

determining, based on a predefined algorithm for determining a resource pattern based on a channel characteristic, the first resource pattern corresponding to the first channel characteristic.

14. The method according to any one of claims 2 to 6, wherein determining the plurality of channel characteristics of the channel of the reference signal port and the reference signal resource configuration information based on the variation of the channel of the reference signal port in frequency domain comprises:

performing manifold metric analysis on a frequency domain channel vector of the reference signal port, to obtain a first manifold metric result and a second manifold metric result that correspond to the frequency domain channel vector, wherein the first manifold metric result corresponds to the first channel characteristic, and the second manifold metric result corresponds to the second channel characteristic; and

determining, based on a preset mapping relationship between a channel characteristic and a resource pattern, the first resource pattern corresponding to the first channel characteristic and the second resource pattern corresponding to the second channel characteristic; or

determining, based on a predefined algorithm for determining a resource pattern based on a channel characteristic, the first resource pattern corresponding to the first channel characteristic and the second resource pattern corresponding to the second channel characteristic.

15. The method according to any one of claims 1 to 6, wherein determining the plurality of channel characteristics of the channel of the reference signal port and the reference signal resource configuration information based on the variation of the channel of the reference signal port in frequency domain comprises:

performing manifold metric analysis on a frequency domain channel vector of the reference signal port, to obtain a first manifold metric result and a second manifold metric result that correspond to the frequency domain channel vector, wherein the first manifold metric result is the first channel characteristic, and the second manifold metric result is the second channel characteristic; and

determining, based on a preset mapping relationship between a metric parameter and a resource pattern, the first resource pattern corresponding to the first manifold metric result, wherein the metric parameter comprises a metric threshold or a metric threshold interval.

16. The method according to any one of claims 2 to 6, wherein determining the plurality of channel characteristics of the channel of the reference signal port and the reference signal resource configuration information based on the variation of the channel of the reference signal port in frequency domain comprises:

performing manifold metric analysis on a frequency domain channel vector of the reference signal port, to obtain a first manifold metric result and a second manifold metric result that correspond to the frequency domain channel vector, wherein the first manifold metric result is the first channel characteristic, and the second manifold metric result is the second channel characteristic; and

determining, based on a preset mapping relationship between a metric parameter and a resource pattern, the first resource pattern corresponding to the first manifold metric result and the second resource pattern corresponding to the second manifold metric result, wherein the metric parameter comprises a metric threshold or a metric threshold interval.

**17.** A reference signal configuration method, comprising:

obtaining reference signal resource configuration information, wherein the reference signal resource configuration information indicates a first resource pattern of the reference signal port, the first resource pattern is associated with a first channel characteristic in a plurality of channel characteristics, and the plurality of channel characteristics are determined based on a variation of a channel of the reference signal port in frequency domain; and

determining a configuration of the reference signal port based on the reference signal resource configuration information.

**18.** The method according to claim 17, wherein the method further comprises:
determining channel information of the reference signal port based on the configuration of the reference signal port.

**19.** The method according to claim 17, wherein the reference signal resource configuration information further indicates a second resource pattern of the reference signal port, and the second resource pattern is associated with a second channel characteristic in the plurality of channel characteristics.

**20.** The method according to claim 19, wherein determining the channel information of the reference signal port based on the configuration of the reference signal port comprises:

obtaining complete channel information of the reference signal port based on the first resource pattern; or
obtaining complete channel information of the reference signal port based on the first resource pattern and the second resource pattern.

**21.** The method according to claim 19, wherein the first resource pattern and the second resource pattern have different densities and/or different locations in frequency domain.

**22.** The method according to claim 19, wherein a quasi co-location relationship exists between a first resource corresponding to the first resource pattern and a second resource corresponding to the second resource pattern.

**23.** The method according to claim 19, wherein the first resource pattern is a common resource pattern, and the second resource pattern is a specified resource pattern of the reference signal port; or

the first resource pattern is a specified resource pattern of the reference signal port, and the second resource pattern is a common resource pattern, wherein
the common resource pattern is a common resource pattern of a plurality of reference signal ports that comprise the reference signal port.

**24.** The method according to claim 19, wherein a first variation corresponding to the first resource pattern in the variation is less than or equal to a first threshold, a second variation corresponding to the second resource pattern in the variation is greater than or equal to a second threshold, and the first threshold is less than the second threshold; or
a first variation corresponding to the first resource pattern in the variation is greater than or equal to a first threshold, a second variation corresponding to the second resource pattern in the variation is less than or equal to a second threshold, and the first threshold is greater than the second threshold.

**25.** The method according to claim 17, wherein obtaining the reference signal resource configuration information comprises:

obtaining the reference signal resource configuration information through protocol predefinition; or
receiving the reference signal resource configuration information from a network device by using a broadcast channel or a control channel.

**26.** The method according to any one of claims 18 to 25, wherein determining the channel information of the reference signal port based on the configuration of the reference signal port comprises:

receiving a first reference signal of the reference signal port based on the first resource pattern; and
performing channel estimation based on the first reference signal, and determining the channel information of the reference signal port.

**27.** The method according to any one of claims 18 to 25, wherein determining the channel information of the reference signal port based on the configuration of the reference signal port comprises:

receiving a first reference signal of the reference signal port based on the first resource pattern;
receiving a second reference signal of the reference signal port based on the second resource pattern; and
performing joint channel estimation based on the first reference signal and the second reference signal, and determining the channel information of the reference signal port.

**28.** The method according to any one of claims 18 to 25, wherein determining the channel information of the reference signal port based on the configuration of the reference signal port comprises:

receiving a first reference signal of the reference signal port based on the first resource pattern; and
determining, based on a preset mapping relationship between a channel component and a resource pattern, a third channel component corresponding to the first resource pattern; or
determining, based on a predefined algorithm for determining a resource pattern based on a channel component, a third channel component corresponding to the first resource pattern; or
determining, based on a preset mapping relationship between a metric parameter of a channel component and a resource pattern, a third channel component corresponding to the first resource pattern, wherein the metric parameter comprises a metric threshold or a metric threshold interval; and
determining the channel information of the reference signal port based on the first reference signal and the third channel component.

**29.** The method according to any one of claims 18 to 25, wherein determining the channel information of the reference signal port based on the configuration of the reference signal port comprises:

receiving a first reference signal of the reference signal port based on the first resource pattern;
receiving a second reference signal of the reference signal port based on the second resource pattern; and
determining, based on a preset mapping relationship between a channel component and a resource pattern, a third channel component corresponding to the first resource pattern and a fourth channel component corresponding to the second resource pattern; or
determining, based on a predefined algorithm for determining a resource pattern based on a channel component, a third channel component corresponding to the first resource pattern and a fourth channel component corresponding to the second resource pattern; or
determining, based on a preset mapping relationship between a metric parameter of a channel component and a resource pattern, a third channel component corresponding to the first resource pattern and a fourth channel component corresponding to the second resource pattern, wherein the metric parameter comprises a metric threshold or a metric threshold interval; and
determining the channel information of the reference signal port based on the first reference signal, the second reference signal, the third channel component, and the fourth channel component.

**30.** The method according to any one of claims 18 to 25, wherein determining the channel information of the reference signal port based on the configuration of the reference signal port comprises:

receiving a first reference signal of the reference signal port based on the first resource pattern;
determining, based on a preset mapping relationship between a metric parameter and a resource pattern, a third manifold metric result corresponding to the first resource pattern, wherein the metric parameter comprises a metric threshold or a metric threshold interval; and
determining the channel information of the reference signal port based on the first reference signal and the third manifold metric result.

**31.** The method according to any one of claims 18 to 25, wherein determining the channel information of the reference signal port based on the configuration of the reference signal port comprises:

receiving a first reference signal of the reference signal port based on the first resource pattern;
receiving a second reference signal of the reference signal port based on the second resource pattern;
determining, based on a preset mapping relationship between a metric parameter and a resource pattern, a third manifold metric result corresponding to the first resource pattern and a fourth manifold metric result corresponding to the second resource pattern, wherein the metric parameter comprises a metric threshold or a metric threshold interval; and
determining the channel information of the reference signal port based on the first reference signal, the second reference signal, the third manifold metric result, and the fourth manifold metric result.

32. The method according to any one of claims 19 to 25, wherein determining the configuration of the reference signal port based on the reference signal resource configuration information comprises:

determining the configuration of the reference signal port based on the first resource pattern and the second resource pattern that are obtained at a first moment; or
determining the configuration of the reference signal port based on the first resource pattern obtained at a first moment and the second resource pattern obtained at a second moment.

33. The method according to any one of claims 19 to 25, wherein determining the configuration of the reference signal port based on the reference signal resource configuration information comprises:

determining the second resource pattern at a second moment based on the first resource pattern obtained at a first moment; and
determining the configuration of the reference signal port based on the first resource pattern and the second resource pattern.

34. A communication apparatus, comprising a communication unit and a processing unit, wherein the communication unit and the processing unit are configured to perform the method according to any one of claims 1 to 16 or claims 17 to 33.

35. A communication apparatus, comprising a processor and a memory, wherein the memory is configured to store instructions, and when the processor executes the instructions, the communication apparatus is enabled to perform the method according to any one of claims 1 to 16 or claims 17 to 33.

36. A communication system, comprising a communication apparatus, wherein the communication apparatus is configured to perform the method according to any one of claims 1 to 16 or claims 17 to 33.

37. A computer-readable storage medium, wherein the computer-readable storage medium stores instructions, and when the instructions are run on a computer, the computer is enabled to perform the method according to any one of claims 1 to 16 or claims 17 to 33.

38. A chip system, wherein the chip system comprises a processor and an interface, and the processor is configured to execute a computer program, so that the chip system implements the method according to any one of claims 1 to 16 or claims 17 to 33.

39. A computer program product, comprising instructions, wherein when the instructions are run on a computer, the computer is enabled to perform the method according to any one of claims 1 to 16 or claims 17 to 33.

Network device

Terminal device

FIG. 1

FIG. 2

$$K_{TC} = 8$$

... Frequency-domain resource block

$$K_{TC} = 4$$

... Frequency-domain resource block

$$K_{TC} = 2$$

... Frequency-domain resource block

FIG. 3

Row=1, ρ=3, port=1, no CDM

Row=2, ρ=1, port=1, no CDM

Row=4, ρ=1, port=4, CDM2

CDM group 0, p={0}

CDM group 0, p={0}

CDM group 0, p={0, 1}

CDM group 1, p={2, 3}

FIG. 4

Network device

Terminal device

S101: The network device determines a plurality of channel characteristics of a channel of a reference signal port and reference signal resource configuration information based on a variation of the channel of the reference signal port in frequency domain

S102: The terminal device obtains the reference signal resource configuration information

S103: The terminal device determines a configuration of the reference signal port based on the reference signal resource configuration information

S104: The terminal device determines channel information of the reference signal port based on the configuration of the reference signal port

FIG. 5

FIG. 6

Change of a channel
of a reference signal
port 1 in frequency
domain

Second resource
pattern of the
reference signal port 1

First resource pattern
of the reference
signal port 1

A horizontal
direction represents
time domain, and
a vertical direction
represents frequency
domain

FIG. 7

Change of a channel of a reference signal port in frequency domain

Second channel component

First channel component

Residual channel component

Signal strength

Frequency-domain subcarrier index

Second resource pattern

First resource pattern

FIG. 8

EP 4 654 510 A1

First resource pattern of a port 0/port 1 (common resource pattern of the port 0/port 1)

Resource patterns of the port 0 and the port 1 (including a first resource pattern and a second resource pattern)

Change of a channel of the port 0 in frequency domain

Change of a channel of the port 1 in frequency domain

Second resource pattern of the port 1 (specified resource pattern of the port 1)

Second resource pattern of the port 0 (specified resource pattern of the port 0)

Chord distance d1

Chord distance d2

Chord distance d3

EP 4 654 510 A1

FIG. 9

1000

1001

Processing unit

1002

Communication unit

FIG. 10

1100

1101

Communication interface

1104

1103

Memory

1102

Processor

FIG. 11

## INTERNATIONAL SEARCH REPORT

| International application No. |
| --- |
| **PCT/CN2023/078151** |

### A. CLASSIFICATION OF SUBJECT MATTER

H04L5/00(2006.01)i

According to International Patent Classification (IPC) or to both national classification and IPC

### B. FIELDS SEARCHED

Minimum documentation searched (classification system followed by classification symbols)

IPC:H04L: H04W

Documentation searched other than minimum documentation to the extent that such documents are included in the fields searched

Electronic data base consulted during the international search (name of data base and, where practicable, search terms used)

3GPP, CNTXT, ENTXTC, VEN, WPABSC: 变化, 参考信号, 快, 慢, 模式, 图样, 信道, change, channel, pattern, RS, reference signal

### C. DOCUMENTS CONSIDERED TO BE RELEVANT

| Category* | Citation of document, with indication, where appropriate, of the relevant passages | Relevant to claim No. |
| --- | --- | --- |
| X | US 2010246527 A1 (QUALCOMM INC.) 30 September 2010 (2010-09-30) description, paragraphs [0035]-[0217], and figures 1-11 | 1-39 |
| A | US 2015207646 A1 (TELEFONAKTIEBOLAGET L M ERICSSON (PUBL)) 23 July 2015 (2015-07-23) entire document | 1-39 |
| A | WO 2018171683 A1 (ZTE CORP.) 27 September 2018 (2018-09-27) entire document | 1-39 |
| A | WO 2018082244 A1 (ZTE CORP.) 11 May 2018 (2018-05-11) entire document | 1-39 |
| A | US 2010232384 A1 (QUALCOMM INC.) 16 September 2010 (2010-09-16) entire document | 1-39 |
| A | CN 102780532 A (HUAWEI TECHNOLOGIES CO., LTD.) 14 November 2012 (2012-11-14) entire document | 1-39 |

☑ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **08 November 2023** | **09 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/078151** |

**C.    DOCUMENTS CONSIDERED TO BE RELEVANT**

| Category* | Citation of document, with indication, where appropriate, of the relevant passages | Relevant to claim No. |
|---|---|---|
| A | US 2019097773 A1 (TELEFONAKTIEBOLAGET L M ERICSSON (PUBL)) 28 March 2019 (2019-03-28) <br> entire document | 1-39 |
| A | WO 2017101607 A1 (ZTE CORP.) 22 June 2017 (2017-06-22) <br> entire document | 1-39 |
| A | KR 20100048871 A (LG ELECTRONICS INC.) 11 May 2010 (2010-05-11) <br> entire document | 1-39 |

Form PCT/ISA/210 (second sheet) (July 2022)

## INTERNATIONAL SEARCH REPORT
### Information on patent family members

| | International application No. |
|---|---|
| | PCT/CN2023/078151 |

| Patent document cited in search report | | | Publication date (day/month/year) | Patent family member(s) | | | Publication date (day/month/year) |
|---|---|---|---|---|---|---|---|
| US | 2010246527 | A1 | 30 September 2010 | WO | 2010120530 | A1 | 21 October 2010 |
| | | | | KR | 20130093691 | A | 22 August 2013 |
| | | | | KR | 101345723 | B1 | 30 December 2013 |
| | | | | RU | 2011143806 | A | 10 May 2013 |
| | | | | RU | 2496243 | C2 | 20 October 2013 |
| | | | | JP | 2012523171 | A | 27 September 2012 |
| | | | | JP | 5420752 | B2 | 19 February 2014 |
| | | | | HK | 1168478 | A1 | 28 December 2012 |
| | | | | KR | 20110139759 | A | 29 December 2011 |
| | | | | KR | 101322347 | B1 | 28 October 2013 |
| | | | | US | 8693429 | B2 | 08 April 2014 |
| | | | | ZA | 201107371 | B | 28 November 2018 |
| | | | | CA | 2754440 | A1 | 21 October 2010 |
| | | | | CA | 2754440 | C | 12 January 2016 |
| | | | | TW | 201136247 | A | 16 October 2011 |
| | | | | TWI | 427981 | B | 21 February 2014 |
| | | | | IL | 215438 | A0 | 29 December 2011 |
| | | | | IL | 215438 | A | 31 October 2016 |
| | | | | BRPI | 1014788 | A2 | 18 July 2017 |
| | | | | BRPI | 1014788 | B1 | 20 April 2021 |
| | | | | EP | 2415196 | A1 | 08 February 2012 |
| | | | | MY | 155861 | A | 15 December 2015 |
| US | 2015207646 | A1 | 23 July 2015 | EP | 2680517 | A1 | 01 January 2014 |
| | | | | EP | 2680517 | B1 | 21 December 2016 |
| | | | | US | 9825781 | B2 | 21 November 2017 |
| | | | | WO | 2014001254 | A1 | 03 January 2014 |
| WO | 2018171683 | A1 | 27 September 2018 | None | | | |
| WO | 2018082244 | A1 | 11 May 2018 | None | | | |
| US | 2010232384 | A1 | 16 September 2010 | WO | 2010105229 | A1 | 16 September 2010 |
| | | | | TW | 201115992 | A | 01 May 2011 |
| CN | 102780532 | A | 14 November 2012 | US | 2014086085 | A1 | 27 March 2014 |
| | | | | US | 9191845 | B2 | 17 November 2015 |
| | | | | WO | 2012152206 | A1 | 15 November 2012 |
| | | | | EP | 2698935 | A1 | 19 February 2014 |
| | | | | EP | 2698935 | A4 | 16 April 2014 |
| | | | | EP | 2698935 | B1 | 07 December 2016 |
| US | 2019097773 | A1 | 28 March 2019 | ES | 2912081 | T3 | 24 May 2022 |
| | | | | WO | 2018104914 | A1 | 14 June 2018 |
| | | | | JP | 6632771 | B1 | 22 January 2020 |
| | | | | JP | 2020504496 | A | 06 February 2020 |
| | | | | ES | 2800928 | T3 | 05 January 2021 |
| | | | | PL | 3675410 | T3 | 25 July 2022 |
| | | | | CO | 2019003681 | A2 | 30 April 2019 |
| | | | | US | 2021351891 | A1 | 11 November 2021 |
| | | | | US | 11683139 | B2 | 20 June 2023 |
| | | | | PH | 12019500908 | A1 | 20 January 2020 |
| | | | | AU | 2017371947 | A1 | 27 June 2019 |
| | | | | AU | 2017371947 | B2 | 14 May 2020 |
| | | | | KR | 20190085011 | A | 17 July 2019 |

Form PCT/ISA/210 (patent family annex) (July 2022)

# EP 4 654 510 A1

**INTERNATIONAL SEARCH REPORT**
Information on patent family members

International application No.

**PCT/CN2023/078151**

| Patent document cited in search report | | Publication date (day/month/year) | Patent family member(s) | | | Publication date (day/month/year) |
|---|---|---|---|---|---|---|
| | | | KR | 102074790 | B1 | 10 February 2020 |
| | | | EP | 3965356 | A1 | 09 March 2022 |
| | | | DK | 3510716 | T3 | 29 June 2020 |
| | | | PL | 3510716 | T3 | 14 December 2020 |
| | | | US | 10516513 | B2 | 24 December 2019 |
| | | | US | 2020295897 | A1 | 17 September 2020 |
| | | | US | 11038645 | B2 | 15 June 2021 |
| | | | RU | 2705985 | C1 | 14 November 2019 |
| | | | ZA | 201902386 | B | 26 August 2020 |
| | | | EP | 3510716 | A1 | 17 July 2019 |
| | | | EP | 3510716 | B1 | 13 May 2020 |
| | | | JP | 2020099047 | A | 25 June 2020 |
| | | | JP | 6902596 | B2 | 14 July 2021 |
| | | | DK | 3675410 | T3 | 14 March 2022 |
| | | | PT | 3675410 | T | 29 March 2022 |
| | | | HUE | 051420 | T2 | 01 March 2021 |
| | | | US | 2020067671 | A1 | 27 February 2020 |
| | | | US | 11108519 | B2 | 31 August 2021 |
| | | | EP | 3675410 | A1 | 01 July 2020 |
| | | | EP | 3675410 | B1 | 23 February 2022 |
| | | | KR | 20200015816 | A | 12 February 2020 |
| | | | KR | 102296677 | B1 | 02 September 2021 |
| | | | MX | 2019006474 | A | 21 August 2019 |
| WO | 2017101607 | A1 | 22 June 2017 | None | | |
| KR | 20100048871 | A | 11 May 2010 | KR | 101608777 | B1 | 04 April 2016 |

Form PCT/ISA/210 (patent family annex) (July 2022)